(19)

**Europäisches Patentamt**
**European Patent Office**
**Office européen des brevets**

(11) **EP 4 661 312 A1**

(12) **EUROPEAN PATENT APPLICATION**
published in accordance with Art. 153(4) EPC

(43) Date of publication:
**10.12.2025 Bulletin 2025/50**

(21) Application number: **24789116.1**

(22) Date of filing: **20.03.2024**

(51) International Patent Classification (IPC):
*H04B 7/06* $^{(2006.01)}$    *H04W 74/00* $^{(2009.01)}$
*H04W 74/08* $^{(2024.01)}$    *H04W 76/15* $^{(2018.01)}$
*H04L 69/14* $^{(2022.01)}$    *H04W 84/12* $^{(2009.01)}$
*H04W 24/10* $^{(2009.01)}$    *H04W 24/08* $^{(2009.01)}$
*H04W 16/02* $^{(2009.01)}$

(52) Cooperative Patent Classification (CPC):
**H04B 7/06; H04L 69/14; H04W 16/02; H04W 24/08; H04W 24/10; H04W 74/00; H04W 74/08; H04W 76/15; H04W 84/12**

(86) International application number:
**PCT/KR2024/095594**

(87) International publication number:
**WO 2024/215176 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.04.2023 KR 20230047059**
          **10.04.2023 KR 20230047061**
          **12.04.2023 KR 20230048402**

(71) Applicant: **LG Electronics Inc.**
**Yeongdeungpo-gu**
**Seoul 07336 (KR)**

(72) Inventors:
 • **CHUN, Jinyoung**
  **Seoul 06772 (KR)**
 • **CHOI, Jinsoo**
  **Seoul 06772 (KR)**
 • **LIM, Dongguk**
  **Seoul 06772 (KR)**
 • **PARK, Eunsung**
  **Seoul 06772 (KR)**
 • **JANG, Insun**
  **Seoul 06772 (KR)**
 • **BAEK, Sunhee**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR PERFORMING OBSS SOUNDING PROCEDURE IN WIRELESS LAN SYSTEM**

(57) Proposed are a method and apparatus for performing an OBSS sounding procedure in a wireless LAN system. Specifically, a receiving STA receives a first trigger frame from a first transmitting STA. The receiving STA receives an NDPA frame from a second transmitting STA. The receiving STA receives an NDP frame from the second transmitting STA. On the basis of the NDPA frame and NDP frame, the receiving STA transmits a feedback frame to the first or second transmitting STA. The first trigger frame contains information about an OAID. The OAID is information for the second transmitting STA to identify the receiving STA. The NDPA frame, NDP frame, and feedback frame are transmitted and received on the basis of the OAID.

FIG. 40

```
receiving, by a second transmitting station (STA),
a first trigger frame from a first transmitting STA        ⟋ S4010

transmitting, by the second transmitting STA,
a Null Data Packet Announcement (NDPA) frame              ⟋ S4020
to a receiving STA

transmitting, by the second transmitting STA,
an NDP frame to the receiving STA                          ⟋ S4030

receiving, by the second transmitting STA,
a feedback frame based on the NDPA frame                   ⟋ S4040
and the NDP frame from the receiving STA
```

## Description

### TECHNICAL FIELD

This specification relates to a technique for performing an OBSS sounding procedure in a wireless LAN system, and more specifically, to a method and device for setting IDs for non-associated STAs to feed back or receive feedback on information for an OBSS channel.

### BACKGROUND ART

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.1 The standard.

In a new WLAN standard, an increased number of spatial streams may be used. In this case, in order to properly use the increased number of spatial streams, a signaling technique in the WLAN system may need to be improved.

### DISCLOSURE

### TECHNICAL PROBLEM

This specification proposes a method and device for performing an OBSS sounding procedure in a wireless LAN system.

### TECHNICAL SOLUTION

An example of this specification proposes a method for performing an OBSS sounding procedure.

This embodiment may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

This embodiment is performed at a receiving STA, and the receiving STA may correspond to a beamformee or at least one station (STA). The transmitting STA may correspond to a beamformer or an access point (AP).

This embodiment proposes a method for an OBSS AP to perform an NDP sounding procedure for BSS STAs, or for a BSS AP to perform an NDP sounding procedure for OBSS STAs. In particular, this embodiment proposes a method for setting IDs for non-associated STAs to feed back or receive feedback on information for an OBSS channel.

A receiving station (STA) receives a first trigger frame from a first transmitting STA.

The receiving STA receives a Null Data Packet Announcement (NDPA) frame from a second transmitting STA.

The receiving STA receives an NDP frame from the second transmitting STA.

The receiving STA transmits a feedback frame to the first or second transmitting STA based on the NDPA frame and the NDP frame.

The receiving STA is a Basic Service Set (BSS) STA, the first transmitting STA is a BSS AP, and the second transmitting STA is an Overlapping Basic Service Set (OBSS) AP.

The first trigger frame includes information for an OBSS Association Identifier (OAID). The OAID is information for the second transmitting STA to identify the receiving STA. The NDPA frame, the NDP frame, and the feedback frame are transmitted and received based on the OAID.

That is, the present embodiment proposes a method for setting an OAID to perform a sounding procedure for the receiving STA that is unassociated with the second transmitting STA.

### ADVANTAGEOUS EFFECTS

According to the embodiment proposed in this specification, there is an effect that the BSS AP can more accurately and quickly obtain channel information for the neighboring APs (OBSS APs) of the BSS STA (or the OBSS AP can obtain channel information for the neighboring APs (BSS APs) of the OBSS STA) so that multi-AP operations (especially, Coordinated-BeamForming (C-BF) or Joint-Transmission (J-TX) etc.) can be performed more efficiently.

## BRIEF DESCRIPTION OF THE DRAWINGS

FIG. 1 shows an example of a transmitting apparatus and/or receiving apparatus of the present specification.

FIG. 2 is a conceptual view illustrating the structure of a wireless local area network (WLAN).

FIG. 3 illustrates a general link setup process.

FIG. 4 shows an example of a multi-link (ML).

FIG. 5 shows an example of a physical protocol data unit or physical layer (PHY) protocol data unit (PPDU) transmitted/received by an STA of the present disclosure.

FIG. 6 is a diagram illustrating the layout of resource units (RUs) used for a 20 MHz PPDU.

FIG. 7 is a diagram illustrating the layout of resource units (RUs) used for 40MHz PPDU.

FIG. 8 is a diagram illustrating the layout of resource units (RUs) used for an 80MHz PPDU.

FIG. 9 shows an operation related to UL-MU.

FIG. 10 illustrates an example of channels used/supported/defined within the 2.4 GHz band.

FIG. 11 illustrates an example of channels used/supported/defined within the 5 GHz band.

FIG. 12 illustrates an example of channels used/supported/defined within the 6 GHz band.

FIG. 13 illustrates an example of a modified transmission device and/or receiving device of the present specification.

FIG. 14 illustrates operation according to a conventional STX operation.

FIG. 15 illustrates an example of Coordinated OFDMA (C-OFDMA).

FIG. 16 illustrates an example of Coordinated Beamforming (CBF).

FIG. 17 illustrates an example of AP selection.

FIG. 18 illustrates an example of JTX/JT.

FIG.19 illustrates an example of an OBSS environment.

FIG. 20 illustrates an example of the A-control subfield of the HE variant HT Control field.

FIG. 21 illustrates an example of the Control Information subfield of the ELA Control subfield.

FIG. 22 illustrates an example of the A-Control subfield for an MLA Request/Response.

FIG. 23 illustrates another example of the A-Control subfield for an MLA Request/Response.

FIG. 24 illustrates another example of the A-Control subfield for an MLA Request/Response.

FIG. 25 illustrates another example of the A-Control subfield for an MLA Request/Response.

FIG. 26 is a diagram illustrating the effects of increasing and decreasing transmit power and sensitivity in a WLAN.

FIG. 27 is an example of the CS region in a WLAN system.

FIG. 28 is a graph illustrating OBSS/PD and transmission power adjustment rules.

FIG. 29 illustrates an example of the Measurement Request field format of a Beacon request.

FIG. 30 illustrates an example of the Measurement Report field format of a Beacon report.

FIG. 31 illustrates an example of the Trigger Frame format.

FIG. 32 illustrates an example of the NDP Announcement frame format.

FIG. 33 illustrates an example of EHT non-TB sounding.

FIG. 34 illustrates an example of EHT TB sounding.

FIG. 35 illustrates an example of an NDP sounding procedure for acquiring OBSS channel information.

FIG. 36 illustrates an example of an NDP sounding procedure for OBSS APs.

FIG. 37 illustrates another example of an NDP sounding procedure for OBSS APs.

FIG. 38 is a flowchart illustrating the operation of a transmitting device according to the present embodiment.

FIG. 39 is a flowchart illustrating the operation of a receiving device according to the present embodiment.

FIG. 40 is a flowchart illustrating a procedure for an OBSS AP to perform an OBSS sounding procedure with a BSS STA according to the present embodiment.

FIG. 41 is a flowchart illustrating a procedure for a BSS STA to perform an OBSS sounding procedure with an OBSS AP according to the present embodiment.

## MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

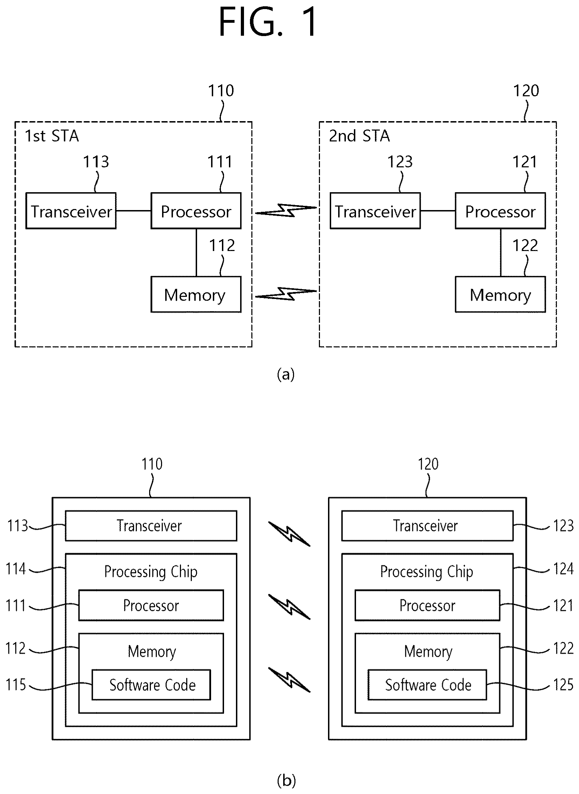

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm®, EXYNOSTM series of processors made by Samsung®, A series of processors made by Apple®, HELIOTM series of processors made by MediaTek®, ATOMTM series of processors made by Intel® or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

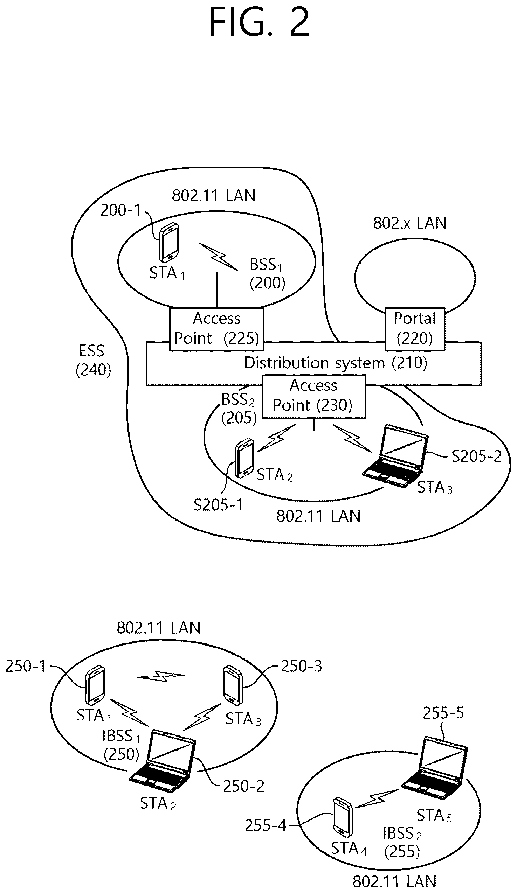

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

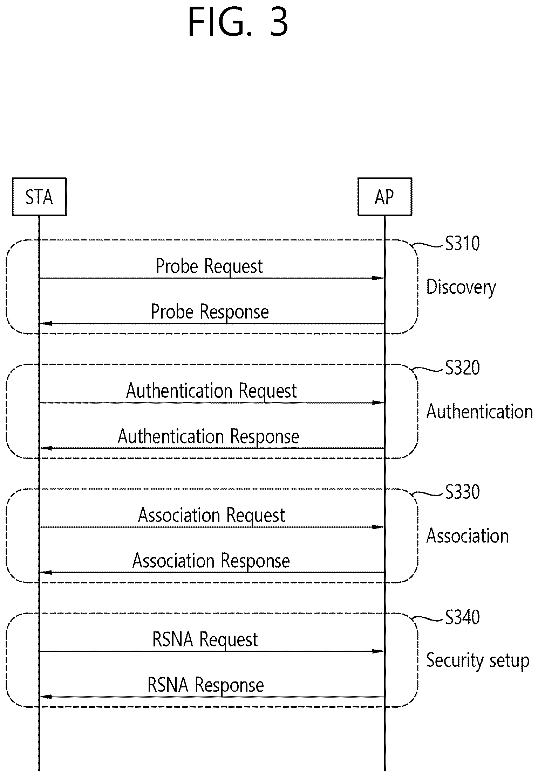

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

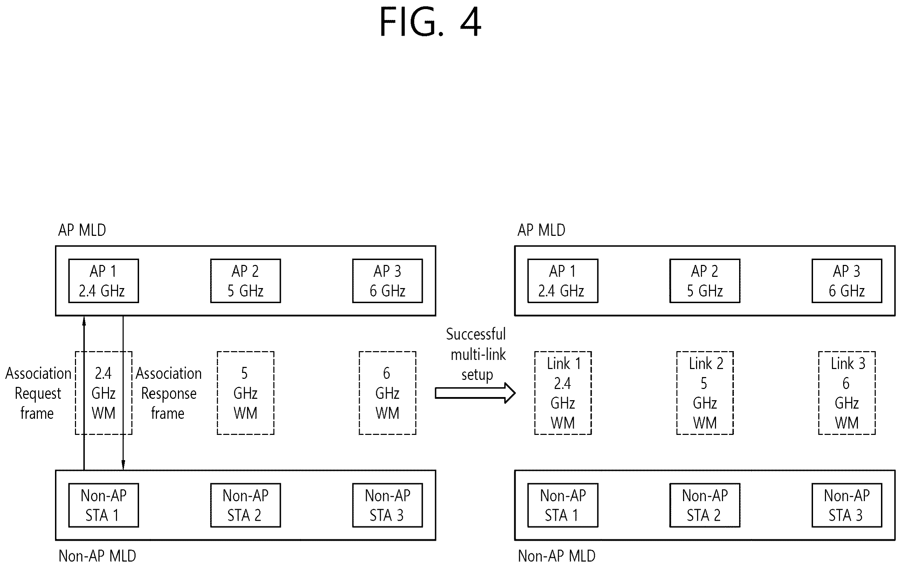

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/-

subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

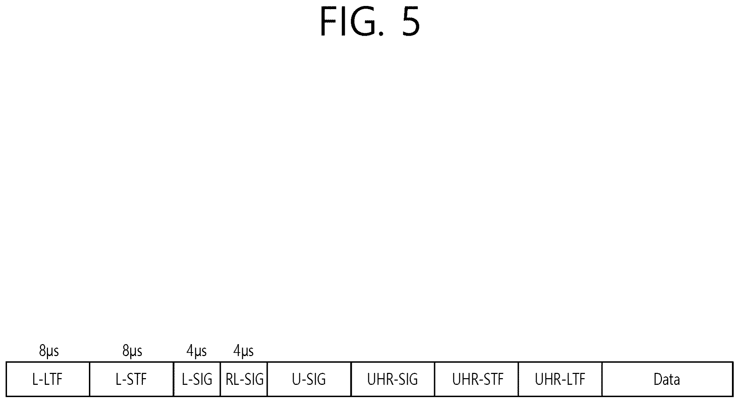

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an $N^{th}$ type PPDU, etc. The PPDU described in the present disclosure can be used in a WLAN system defined according to IEEE 802.11bn and/or a next-generation WLAN system that improves IEEE 802.11bn.

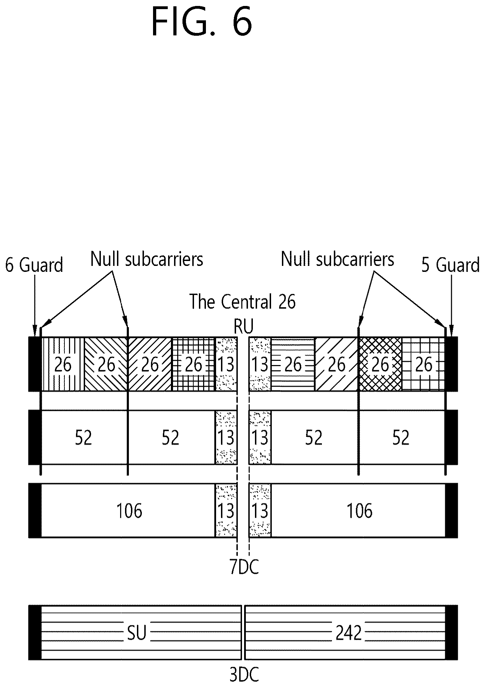

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/-signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{ subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28). The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

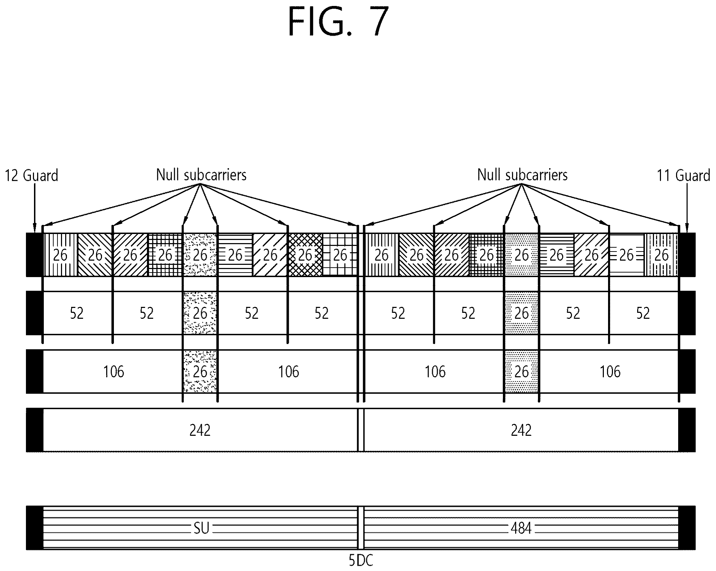

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

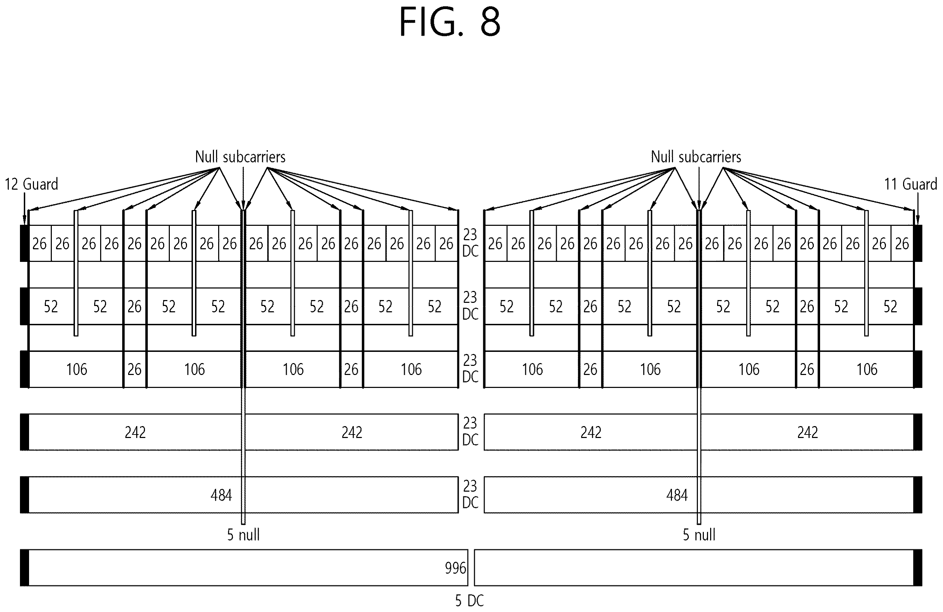

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

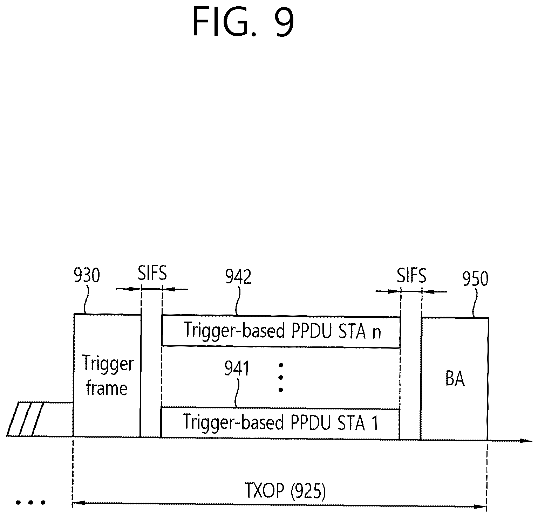

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

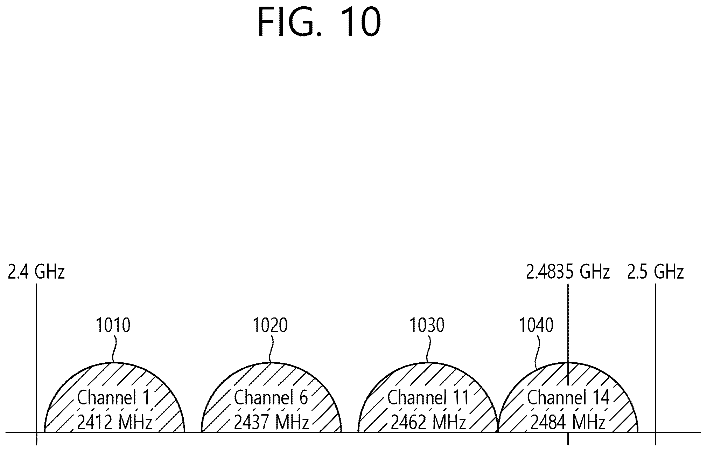

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be $(2.407 + 0.005*N)$ GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

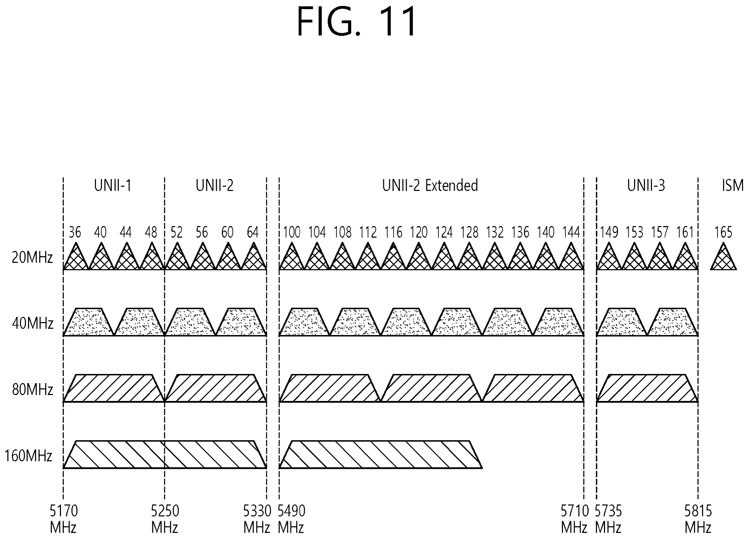

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

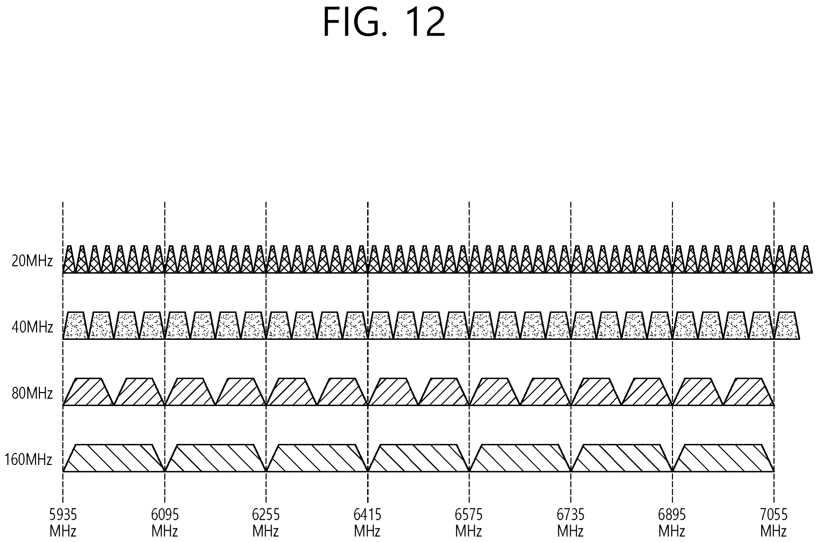

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as $(5.940 + 0.005*N)$ GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

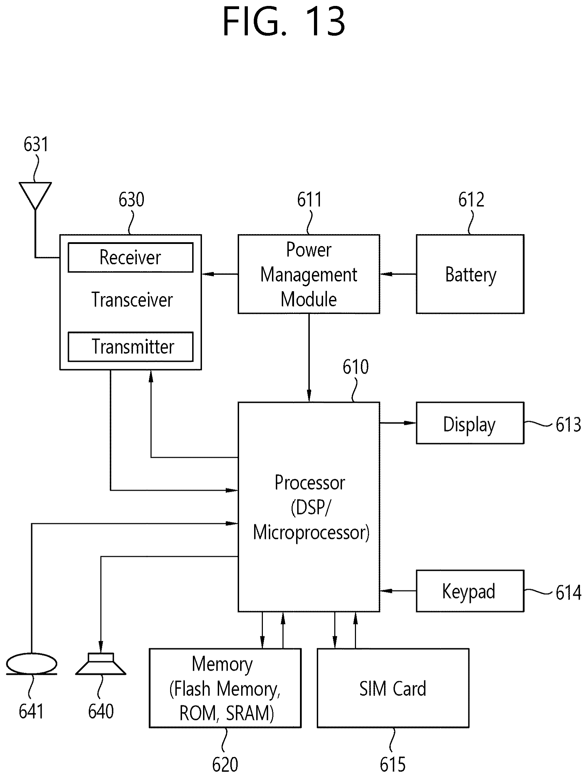

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

The memory 150 of FIG. 13 may be the same as the memory 112, 122 of FIG. 1. Alternatively, the memory 150 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 13, the speaker (640) may output sound-related results processed by the processor 610. The microphone (641) may receive sound-related input to be used by the processor 610.

Below, the Multi-AP operation applied to this specification is described.

The Multi-AP operation refers to a communication technique involving multiple APs in a WLAN. For example, the Multi-AP operation may refer to an operation in which one or more APs transmit and receive information to one or more STAs. In contrast to the Multi-AP operation, existing techniques may be expressed using various terms, such as STX (Single Transmission). For example, the STX operation may refer to a method in which one BSS AP communicates with one BSS STA. When communication is performed based on the STX operation, interference with adjacent APs (e.g., APs located in an overlapping BSS) may occur. This interference may result in reduced transmission and reception performance for cell-edge users (e.g., non-AP STAs located at the edge of the BSS).

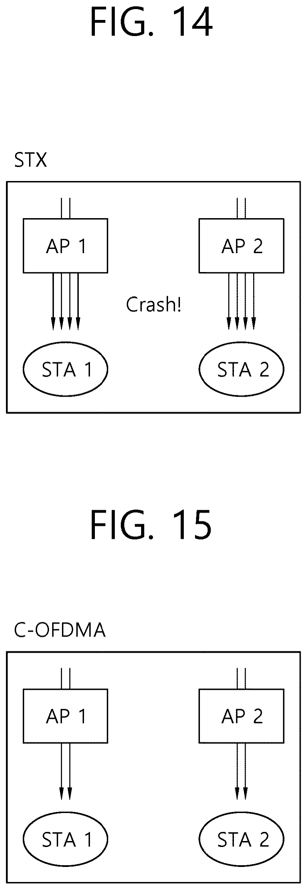

FIG. 14 illustrates operation according to a conventional STX operation. As shown, adjacent AP1 and AP2 can cause interference between STAs and APs.

To improve the STX operation, a new multi-AP operation is proposed. This multi-AP operation can be based on a technology that reduces various interferences, such as inter-symbol interference (ISI), through coordination with neighboring APs (e.g., APs located in an overlapping BSS).

In FIG. 14, STA1 and AP1 may be included in a BSS, and STA2 and AP2 may be included in an OBSS (Overlapping Basic Service Set). That is, STA2 may be an unassociated STA to AP1, and STA1 may be an unassociated STA to AP2.

For example, the Multi-AP operation can be classified into various technologies/types/formats/protocols, etc. For example, the Multi-AP operation can include Coordinated TDMA (C-TDMA) that distinguishes wireless resources allocated to multiple APs based on a time axis (time domain). Additionally or alternatively, the Multi-AP operation can include Coordinated OFDMA (C-OFDMA) that distinguishes wireless resources allocated to multiple APs based on a frequency axis (time domain). Additionally or alternatively, the Multi-AP operation can include Coordinated Spatial Reuse (C-SR) that applies Spatial Reuse (SR) to at least one AP. Additionally or alternatively, the Multi-AP operation can include Coordinated beamforming (CBF)/nulling that nulls and transmits interference generated from neighbors (e.g., adjacent APs/STAs, and/or OBSS APs/OBSS STAs). Additionally or alternatively, the Multi-AP operation may include AP selection in which an AP with a good channel condition among neighboring APs (e.g., at least one AP located within a BSS or OBSS and with a good channel condition) transmits. Additionally or alternatively, the Multi-AP operation may include Joint Transmission (JTX) or JT in which multiple APs (e.g., multiple APs included in the same BSS/OBSS, or multiple APs included in different BSS/OBSS) cooperate to perform simultaneous transmission and reception, and JTX/JT may be implemented based on Joint Beamforming or Joint MU-MIMO.

FIG. 15 illustrates an example of Coordinated OFDMA (C-OFDMA). The illustrated AP1 can transmit a PPDU/signal to STA1, and AP2 can transmit a PPDU/signal to STA2. The transmission from AP1 and the transmission from AP2 can be performed in the same/overlapping time interval. The transmission from AP1 to STA1 can be performed based on a first frequency band, and the transmission from AP2 to STA2 can be performed based on a second frequency band different from the second frequency band. For example, in FIG. 15, STA1 and AP1 can be included in a BSS, and STA2 and AP2 can be included in an OBSS. That is, STA2 can be an unassociated STA to AP1, and STA1 can be an unassociated STA to AP2.

Although not illustrated in FIG. 15, an example of Coordinated TDMA (C-TDMA) is also possible. For example, the acquired TXOP can be divided into specific time units (e.g., slots), and the divided slots can be sequentially assigned to multiple different APs.

The above-described C-OFDMA example can be further modified as follows. For example, an AP (e.g., AP1) that has acquired a TXOP can share frequency resources with at least one neighboring AP (e.g., AP2 in the BSS/OBSS). For example, shared frequency resources can be defined on a resource unit (RU) basis or a subchannel basis. For example, for flexibility, frequency resources can be shared from AP1 to AP2 in 20/40/80 MHz subchannels or 242/484/996-tone RU units.

AP1, performing C-OFDMA, can act as a sharing AP or a master AP. That is, AP1 can request at least one neighboring AP (e.g., AP2 in the BSS/OBSS) to report information about the channel and/or buffer status. Based on this, AP1 can obtain a TXOP and share a part of the frequency resource (e.g., a 20 MHz subchannel or a RU of a certain size) with at least one AP in the vicinity (e.g., AP2 existing in the BSS/OBSS) within all or part of the time interval related to the TXOP.

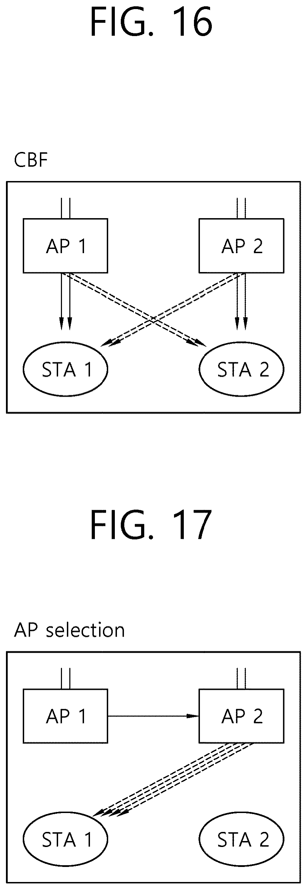

FIG. 16 illustrates an example of Coordinated Beamforming (CBF). The illustrated AP1 may transmit a PPDU/signal to STA1, and AP2 may transmit a PPDU/signal to STA2. The transmission from AP1 and the transmission from AP2 may be performed in the same/overlapping time interval. The transmission from AP1 and the transmission from AP2 may be performed through the same/overlapping frequency band. In order to reduce interference caused to STA2 by AP1, AP1 may perform nulling/beamforming toward STA2, and in order to reduce interference caused to STA1 by AP2, AP2 may perform nulling/beamforming toward STA1. For example, such nulling/beamforming may be implemented in a manner of positioning a radiation null to a neighboring unassociated STA. The above-described nulling/beamforming may make a specific AP invisible to a neighboring unassociated STA. For example, the above-described nulling/beamforming may make AP1 (or AP2) invisible to STA2 (or STA1).

For example, in FIG. 16, STA1 and AP1 may be included in the BSS, while STA2 and AP2 may be included in the OBSS. In other words, STA2 may be an unassociated STA to AP1, and STA1 may be an unassociated STA to AP2.

Although not illustrated in FIG. 16, control signals (e.g., coordination frames) for nulling/beamforming between AP1 and STA2 and/or nulling/beamforming between AP2 and STA1 may be transmitted and received over the backhaul link between AP1 and AP2.

FIG. 17 illustrates an example of AP selection. The illustrated AP2 is judged to have a better channel condition than AP1. AP1 transmits its data/signal to AP2 via a backhaul link, and AP2 can transmit a signal to STA1 instead of AP1. For example, in FIG. 17, STA1 and AP1 may be included in a BSS, and STA2 and AP2 may be included in an OBSS. In other words, STA2 may be an unassociated STA to AP1, and STA1 may be an unassociated STA to AP2.

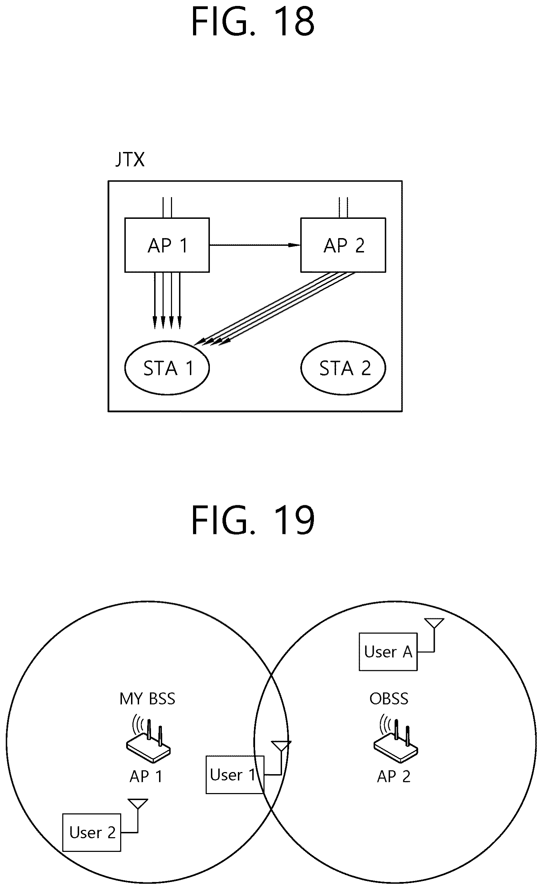

FIG. 18 illustrates an example of JTX/JT. The illustrated AP1 can transmit to STA1 together with AP2. For example, the PPDU/signal transmitted from AP2 to STA1 may be all or part of the same as the PPDU/signal transmitted from AP1 to STA1. For example, the PPDU/signal transmitted from AP2 to STA1 may be simultaneously transmitted through the same/overlapping frequency band as the PPDU/signal transmitted from AP1 to STA1. For example, the PPDU/signal transmitted from AP2 to STA1 may be a signal transmitted from AP1 through a backhaul link. For example, in FIG. 18, STA1 and AP1 may be included in a BSS, and STA2 and AP2 may be included in an OBSS. That is, STA2 may be an unassociated STA to AP1, and STA1 may be an unassociated STA to AP2.

More specifically, in FIG. 18, AP1 can transmit a coordination request (or can be named variously, such as a first request, a control request, etc.) to AP2 and receive a coordination response (or can be named variously, such as a first response, a control response, etc.) from AP2. Through the exchange of the request/response, information about coordination between AP1 and AP2 (e.g., information about whether AP1 and AP2 will perform simultaneous transmission to STA1), information about the point in time when coordination starts, information about the point in time when AP1 and AP2 start simultaneous transmission to STA1, information about data shared between AP1 and AP2, etc. can be exchanged. AP1 can share its data with AP2 via the backhaul link. Thereafter, AP1 can transmit a coordination trigger frame (or can be named variously, such as a trigger frame) to AP2 and perform simultaneous transmission to STA1 based on the trigger frame.

Below, a link adaptation technique for OBSS AP/STA applied to this specification is described. In particular, a link adaptation method before the multi-AP configuration is determined and a method for performing a sounding procedure after the multi-AP configuration is determined are described.

<Embodiments applicable to this specification>

FIG.19 illustrates an example of an OBSS environment.

An Overlapping Basic Service Set (OBSS) environment refers to a network environment in which a portion of the space with the same channel configuration overlaps between two BSSs. Referring to FIG. 19, OBSS indicates overlap or interference between MY BSS (network by AP1) to which User 1 (STA 1) is connected and an adjacent BSS (network by AP2) to which User 1 (STA 1) is not connected.

Before the above multi-AP configuration is determined, the following link adaptation methods are described: 1) the MLA Request/Response method using the A-Control subfield to request/report link information from neighboring APs, and 2) a method to configure the Beacon request/response, used to acquire link information from neighboring APs, to include link information at the RU or subchannel level.

First, this specification proposes a link adaptation method for obtaining OBSS channel information for multi-APs in a Wi-Fi system.

This specification defines a link adaptation control field to obtain channel information for various multi-AP operations. Specifically, since APs must have information about STAs capable of transmitting data to form a multi-AP, each STA can be instructed to report the channel status of each AP. While a separate sounding technique could be used, the overhead of receiving detailed channel status reports from multiple APs to multiple STAs is significant. Therefore, by including the +HTC (HT Control field) when transmitting data to each STA, the STA can be instructed to report a rough channel status.

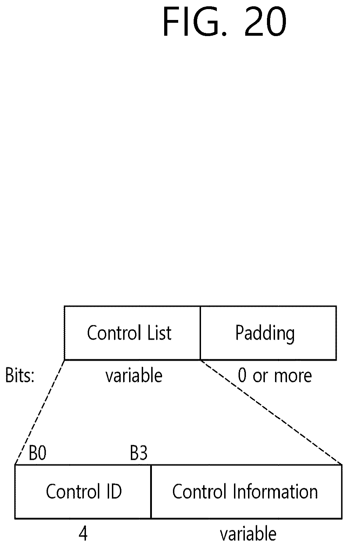

FIG. 20 illustrates an example of the A-control subfield of the HE variant HT Control field.

The top of FIG. 20 illustrates the A-control subfield. Referring to the top of FIG. 20, the Control List subfield includes at least one Control subfield. Each Control subfield is illustrated at the bottom of FIG. 20.

Referring to the bottom of FIG. 20, the Control ID subfield indicates the type of information conveyed in the Control Information subfield. The length of the Control Information subfield is fixed for each value not reserved in the Control ID subfield. The lengths of the Control Information subfields associated with the values of the Control ID subfield are defined as follows.

[Table 1]

| Control ID value | Meaning | Length of the Control Information subfield (bits) | Content of the Control Information subfield |
|---|---|---|---|
| 0 | Triggered response scheduling (TRS) | 26 | TRS Control |
| 1 | Operating mode (OM) | 12 | OM Control |
| 2 | HE link adaptation (HLA)/EHT link adaptation (ELA) | 26 | HLA Control/ELA control |
| 3 | Buffer status report (BSR) | 26 | BSR Control |
| 4 | UL power headroom (UPH) | 8 | UPH Control |
| 5 | Bandwidth query report (BQR) | 10 | BQR Control |
| 6 | Command and status (CAS) | 8 | CAS Control |
| 7 | EHT operating mode (EHT OM) | 6 | EHT OM Control |
| 8 | Single response scheduling (SRS) | 10 | SRS Control |
| 9 | AP assistance request (AAR) | 20 | AAR Control |
| 10-14 | Reserved | | |
| 15 | Ones need expansion surely (ONES) | 26 | Set to all 1s. |

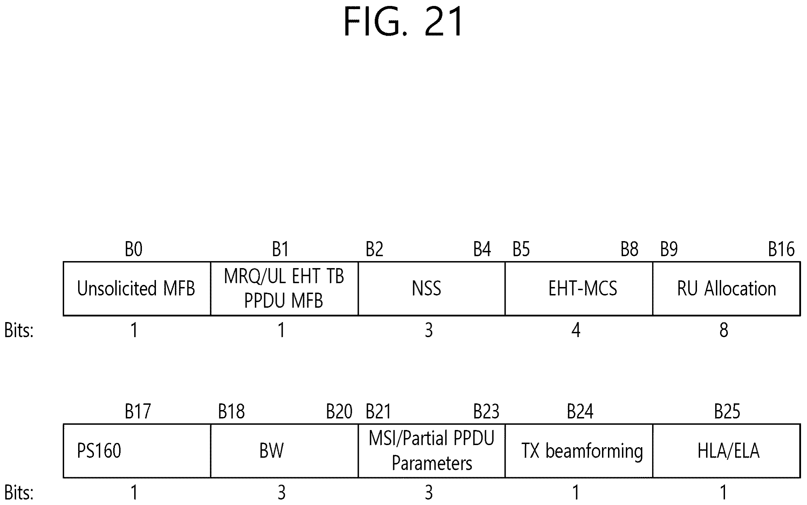

FIG. 21 illustrates an example of the Control Information subfield of the ELA Control subfield.

Referring to FIG. 21, the Control Information subfield of the ELA Control subfield includes information related to the ELA (EHT link adaptation) procedure. The Control Information subfield includes an Unsolicited MFB subfield, an MRQ/UL EHT TB PPDU MFB subfield, an NSS subfield, an EHT-MCS subfield, an RU Allocation subfield, a PS160 subfield, a BW subfield, an MSI/Partial PPDU Parameters subfield, a Tx Beamforming subfield, and an HLA/ELA subfield.

If the ELA control is an unsolicited MFB, the Unsolicited MFB subfield is set to 1. If the ELA control is an MRQ or solicited MFB, the Unsolicited MFB subfield is set to 0.

To request ELA feedback, the MRQ/UL EHT TB PPDU MFB subfield is set to 1 and the Unsolicited MFB subfield is set to 0. To respond to an ELA request, the MRQ/UL EHT TB PPDU MFB subfield is set to 0 and the Unsolicited MFB subfield is set to 0.

First, a new A-control subfield, Control ID, is added for Multi-AP Link Adaptation control. This A-control subfield may be defined by various names, such as SNR (Signal-to-Noise Ratio) control, RSSI (Received Signal Strength Indicator) control, etc., and will be referred to as MLA (Multi-AP Link Adaptation) control in this specification.

Additionally, the MLA control subfield can be configured with the following information. At this time, the contents can be configured to be 26 bits or less in length, or can be configured with multiple MLA control subfields. When configured with multiple MLA control subfields, the number of MLA control subfields can be fixed, or a flag indicating that it is the last can be added to the last subfield, and the flag can be set to 0 or 1 in the last subfield to indicate that it is the last.

1) When an AP requests:

- For example, the request can be directed to measure the RSSI or SNR of a frame containing the MLA Control subfield.
- For another example, the request can be directed to measure the RSSI or SNR from multiple APs. In this case, the BSS Color (6 bits) of the frame to be measured can be specified, and the request can be directed to measure the RSSI (8 bits) or SNR (8 bits). If the number of BSS Colors to be measured is to be variable, a subfield indicating the number or a flag indicating the last BSS Color is required. Alternatively, setting the BSS Color to a specific value (e.g., 0) can be used to designate it as the last subfield. Alternatively, the STA can measure arbitrarily and report the BSS Color and RSSI/SNR without specifying the BSS Color. In this case, the first BSS Color can be specified as a specific value (e.g., 0) or the BSS Color subfield can be omitted. In this case, the BSS Color value can be expressed using fewer bits than the number of bits mentioned above. For example, BSS color can be expressed with only 3 to 5 bits of the Most Significant Bit (MSB) or Least Significant Bit (LSB) out of the total 6 bits.

2) When the STA is receiving a Feedback Response:

- For example, the RSSI or SNR values for the indicated frame or for the associated AP can be reported.
- For another example, the RSSI or SNR values (8 bits) measured for each indicated BSS Color can be reported. If the AP has specified a BSS Color, the BSS Color subfield may be omitted (this can be assumed since the RSSI/SNR values will be transmitted in the order in which they were requested). Feedback can also be provided arbitrarily by the STA without a request from the AP.
- In this case, the BSS Color or RSSI/SNR values can be expressed using fewer bits than the number mentioned above. As explained previously for BSS Color, the RSSI or SNR can be expressed with increased resolution, such as "7 bits at double intervals" or "6 bits at quadruple intervals" instead of 8 bits. Alternatively, the range of expression can be reduced, with values below a certain value set to 0 and values above a certain value set to the maximum. For example, if SNR is expressed as 8 bits in 0.25 increments from -10 dB to 53.75 dB, the number of bits can be reduced by setting the resolution to 0.5 dB or 1 dB increments or limiting the expression range to 0 dB to 31.75 dB.

The MLA Control of this specification can immediately respond to the RSSI or SNR for the instructed frame or associated AP. However, in cases where other RSSI or SNR measurements are required, unlike the existing HLA control, it may not be able to respond immediately in the response frame of the frame in which the request was entered. This is because the frames of other APs must also be checked and feedback must be provided. Therefore, the response may come regardless of the timing of the request or whether or not a request was made. Alternatively, if the STA reads a frame such as a beacon in advance and stores the RSSI information, it can respond immediately when a request is made to the MLA Control. Alternatively, the STA may send a response at a specific time without waiting for the request (unsolicited response).

An example of the A-Control subfield configuration when configuring the MLA Control subfield is as follows. Here, if the length of the Control subfield is set to 26 bits or less, the number of Reserved bits can be reduced.

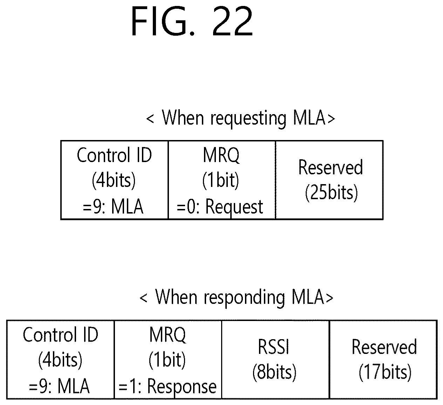

FIG. 22 illustrates an example of the A-Control subfield for an MLA Request/Response.

Referring to FIG. 22, the A-Control subfield for MLA Control can be configured by setting the value of the Control ID subfield to 9 (or another reserved value). If MRQ is 0, the A-Control subfield is used for MLA Request, and the remaining 25 bits can be reserved. If MRQ is 1, the A-Control subfield is used for MLA Response, and a response including the RSSI value can be made, and the remaining 17 bits can be reserved.

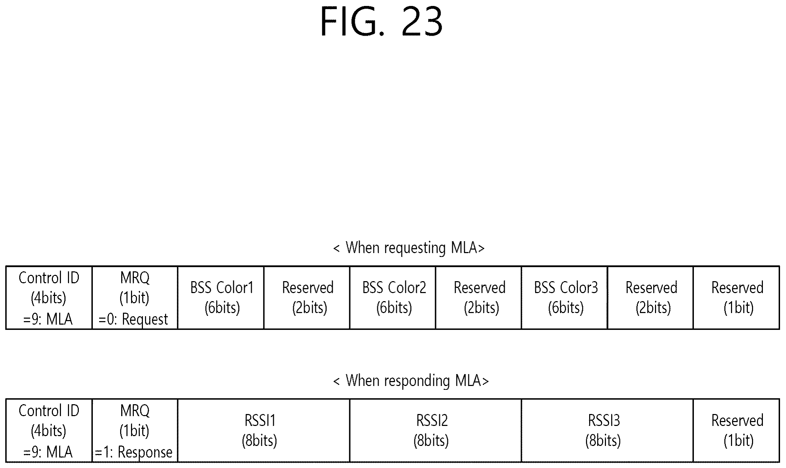

FIG. 23 illustrates another example of the A-Control subfield for an MLA Request/Response.

Referring to FIG. 23, the A-Control subfield for MLA Control can be configured by setting the value of the Control ID subfield to 9 (or another reserved value). When MRQ is 0, the A-Control subfield is used for MLA Request and can include a BSS Color subfield to indicate measurement of RSSI (or SNR) for multiple APs. For example, the A-Control subfield can include a BSS Color 1 subfield, a BSS Color 2 subfield, and a BSS Color 3 subfield to indicate measurement of RSSI (or SNR) for each AP.

When MRQ is 1, the A-Control subfield is used for MLA Response, and responds by including the RSSI value (RSSI 1, RSSI 2, RSSI 3) according to the BSS Color, and the remaining 1 bit can be reserved.

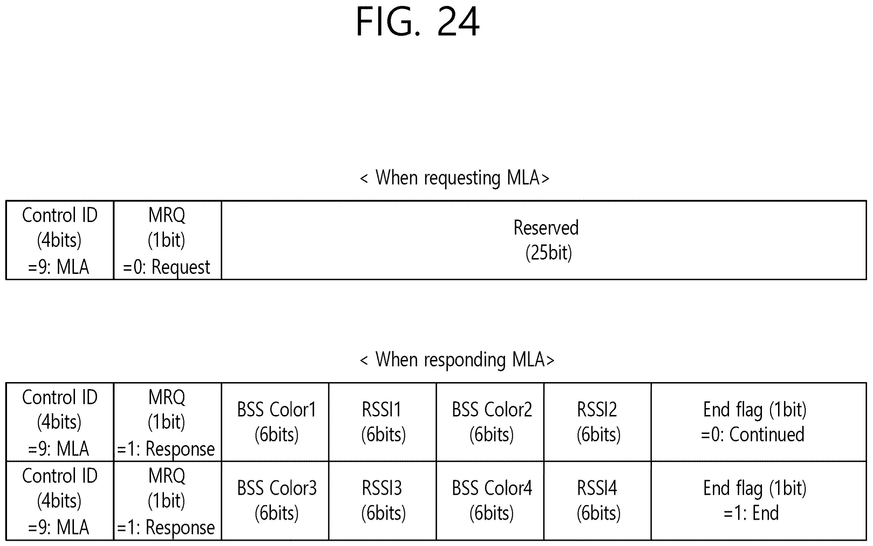

FIG. 24 illustrates another example of the A-Control subfield for an MLA Request/Response.

Referring to FIG. 24, the A-Control subfield for MLA Control can be configured by setting the value of the Control ID subfield to 9 (or another reserved value). When MRQ is 0, the A-Control subfield is used for the MLA Request, and the remaining 25 bits can be reserved.

When MRQ is 1, the A-Control subfield is used for MLA Response, and FIG. 24 shows an example consisting of two MLA control subfields.

The two MLA control subfields for the above MLA Response include a BSS Color subfield and an RSSI (or SNR) value for the BSS Color subfield. For example, the first MLA control subfield may respond with BSS Color 1, RSSI 1 according to BSS Color 1, BSS Color 2, and RSSI 2 according to BSS Color 2, and an End flag may be inserted and set to 0 to indicate that it is not the last MLA control subfield (continued). The second MLA control subfield may respond with BSS Color 3, RSSI 3 according to BSS Color 3, BSS Color 4, and RSSI 4 according to BSS Color 4, and an End flag may be inserted and set to 1 to indicate that it is the last MLA control subfield (End).

As another example, we propose a link adaptation method utilizing a defined Group ID for multi-AP operation.

The Group ID for multi-AP operation is an identifier that collectively represents a set of APs participating in multi-AP operations. It may be defined differently depending on the type of multi-AP operation (e.g., ID for C-OFDMA, ID for C-SR, etc.). Alternatively, a single BSS AP may be included in multiple multi-AP operation sets and thus belong to multiple IDs. This definition can be newly defined or reused from existing standard Group IDs, such as the Mobility Domain Identifier (MDID). This is referred to herein as the Multi-AP ID (MAID), and the detailed configuration method is not covered in this specification. An example of the composition of an MLA request and response using this ID is as follows.

When a BSS AP issues an MLA request, it indicates the MAID to be measured. Depending on the MAID, the measurement start time, measurement duration, or channel information to be measured (e.g., RU allocation) can be set. (Alternatively, setting the MAID to the default value may eliminate the need for separate signaling.)

An STA that receives an MLA request or makes an MLA response can include the measured MAID. It can respond in the order of the BSSs included in the MAID. Alternatively, it can include the index of that order to replace the previous BSS color. Alternatively, it can provide a bitmap of the APs included in the measurement during that order. (This reduces the number of bits used compared to listing the BSS colors as before.) For example, the AP index can be used to determine which AP's RSSI is being measured.

The feedback value can be various channel values such as Received Channel Power Indicator (RCPI), Received Power Indicator (RPI), Average Noise Power Indicator (ANPI), Received Signal-to-Noise Indication (RSNI), etc., including the values mentioned above. It can be a value for the entire band, a value for the entire band excluding disabled subchannels, or a value for the band if RU allocation is included. It can also include information about disabled subchannels, preferred (sub)channel(s) / avoided (sub)channel(s) / idle (sub)channel(s), etc. (For example, RU allocation can indicate preferred/avoided/idle subchannels). One or more of these feedback values can be included and transmitted.

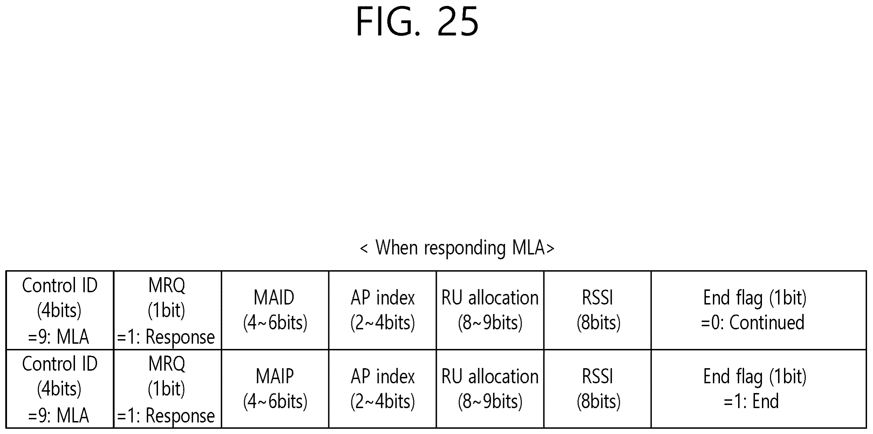

One A-control may be used per channel value of an OBSS AP in an MLA Response. When reporting channel values for two OBSS APs, as shown in FIG. 25, two A-control subfields may be used.

FIG. 25 illustrates another example of the A-Control subfield for an MLA Request/Response.

Referring to FIG. 25, when MRQ is 1, the A-Control subfield is used for MLA Response, and FIG. 25 shows an example consisting of two MLA control subfields for two OBSS APs.

The two MLA control subfields for the above MLA Response can respond with RU allocation and RSSI for each OBSS AP, including MAID and AP index. For example, the first MLA control subfield for the first OBSS AP can respond with RU allocation and RSSI value according to MAID and AP index, and an End flag can be inserted and set to 0 to indicate that it is not the last MLA control subfield (continued). The second MLA control subfield for the second OBSS AP can respond with RU allocation and RSSI value according to MAID and AP index, and an End flag can be inserted and set to 1 to indicate that it is the last MLA control subfield (End).

While all of the above embodiments have suggested information or configurations that can be included in the MLA subfield of A-control, new control frames can also be defined. For example, they can be transmitted in the form of an Aggregated-MAC Protocol Data Unit (A-MPDU) with other frames.

That is, the present embodiment proposes a method for acquiring channel information for multi-AP operation by defining an A-control subfield for MLA control. To this end, an AP requests channel information from an STA through the A-control subfield for MLA control, and the STA responds to the request through the A-control subfield for MLA control.

Furthermore, this specification proposes a radio measurement procedure for OBSS channel measurement in a Wi-Fi system.

APs participating in spatial reuse can request Beacon Reports from associated non-AP STAs to obtain channel information about their neighbors (OBSS APs). This information can include operating class, channel number, frame type and PHY type of the measurement frame, RCPI, RSNI, BSSID, etc. Optionally, the requested information can also include frame body information of the measurement frame or, in 802.11be, disabled subchannel information.

This specification proposes a method for acquiring more granular neighborhood channel information to improve spatial reuse or to efficiently operate multi-AP operation techniques.

Spatial Reuse (SR), introduced in 802.11ax WLAN systems, improves spectral efficiency by increasing the number of parallel transmissions. SR allows for Carrier Sense Threshold (CST) adjustments for detected interBSS transmissions. CST adjustments are achieved through two mechanisms: i) Overlapping Basic Service Set Packet Detect (OBSS PD)-based SR and ii) Parameterized Spatial Reuse (PSR).

The key difference between the two mechanisms lies in the degree of cooperation between BSSs to identify SR-based opportunities. Both mechanisms include Transmission Power Control (TPC), which limits the additional interference generated by concurrent transmissions.

SR operation is introduced as a mechanism to increase the number of transmissions stored in OBSS and spectral efficiency. In some cases, dynamic sensitivity and transmit power adjustment have been shown to significantly improve network performance and mitigate the well-known hidden/exposed device problem. However, in some cases, modifying CST or transmit power can exacerbate the hidden/exposed device problem by creating flow starvation and asymmetry.

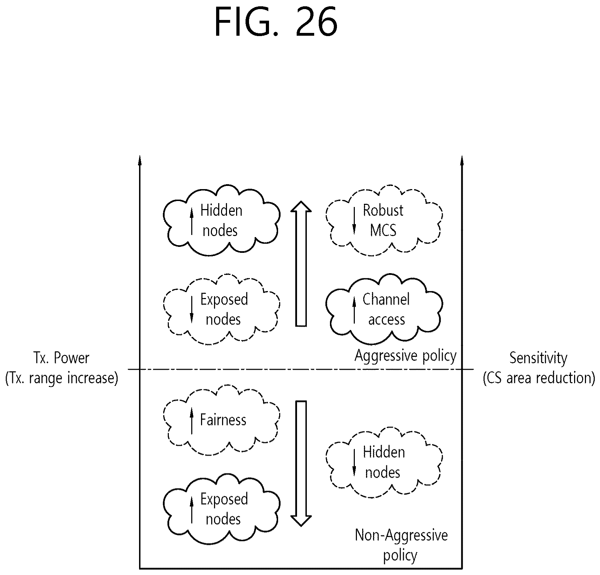

FIG. 26 is a diagram illustrating the effects of increasing and decreasing transmit power and sensitivity in a WLAN. For example, increasing the sensitivity may contribute to more frequent channel access because it reduces the carrier sense (CS) region. However, this may lead to observing a greater number of collisions caused by hidden nodes. Furthermore, using a more aggressive channel access policy may expose the receiver to higher levels of interference, necessitating a more robust modulation and coding scheme (MCS).

SR operation relies on dynamic Clear Channel Assessment/Carrier Sense (CCA/CS) adjustments to increase the number of transmit opportunities (TXOPs) in the OBSS. The CCA/CS mechanism is triggered by a Wi-Fi device when it detects the preamble of another device's transmission. A detected transmission (that exceeds the physical sensitivity threshold) may not be properly decoded if the received signal is poor. In contrast, for a decoded transmission that exceeds the CCA/CS threshold, a physical or virtual carrier sense operation sets the medium to busy. Furthermore, the capture effect is used when detecting multiple signals, allowing the device to lock onto the strongest signal without experiencing packet collisions.

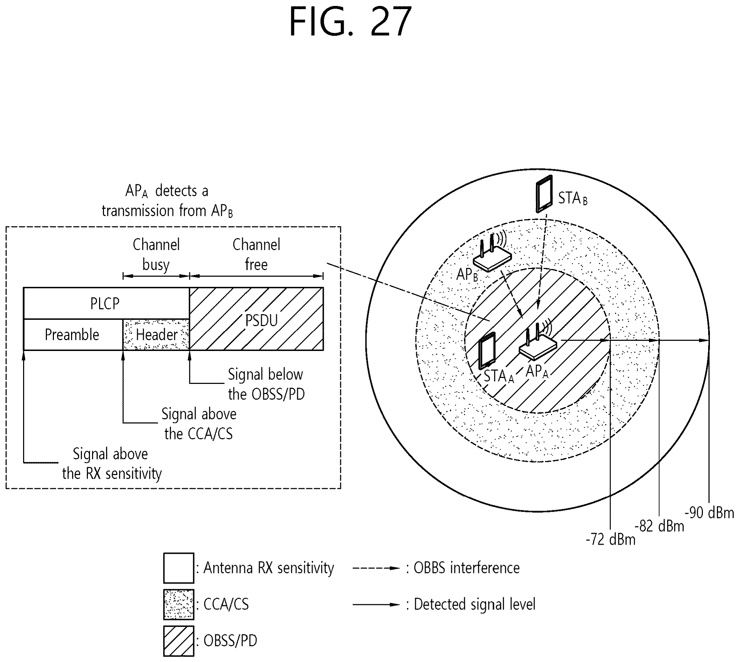

FIG. 27 is an example of the CS region in a WLAN system.

The aforementioned concept is illustrated in FIG. 27. In FIG. 27, the $AP_A$ in the center can detect received signals higher than the antenna's receiver sensitivity, but can only decode signals above the CCA/CS threshold. Furthermore, 11ax SR operation allows $AP_B$ transmissions to be ignored using the OBSS/PD threshold, improving channel utilization. Furthermore, transmit power limits are applied to TXOPs detected using the OBSS/PD threshold. In FIG. 13, the transmit power is fixed, and all devices use the same frequency channel.

1) OBSS PD-based SR

Upon receiving a PPDU, the MAC layer of a specific device receives a notification from the PHY. The node then examines the frame and, among other actions, determines whether the PPDU is an Intra-BSS or Inter-BSS frame. By quickly identifying the source of an ongoing transmission, the HE STA can improve its chances of accessing the channel using appropriate OBSS/PD values.

802.11ax defines a set of rules to limit the OBSS/PD thresholds, with the following upper limits:

$$\text{OBSS/PD} \le \max\left(\text{OBSS/PD}_{min}, \min\left(\text{OBSS/PD}_{max}, \text{OBSS/PD}_{min} + (\text{TX\_PWR}_{ref} - \text{TX\_PWR})\right)\right)$$

Here, $\text{OBSS/PD}_{min}$ and $\text{OBSS/PD}_{max}$ are -82dBm and -62dBm, respectively, the reference power $\text{TX PWR}_{ref}$ is 21dBm or 25dBm depending on the capability of the device, and TX PWR refers to the transmit power at the antenna connector in dBm of the HE node that identifies the SR-based TXOP.

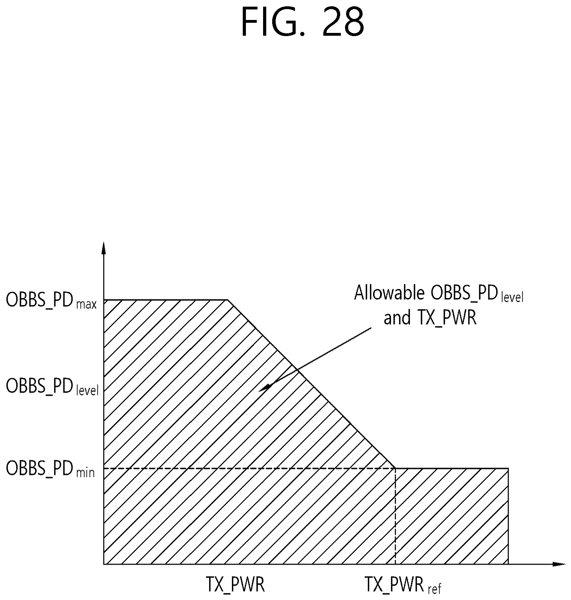

FIG. 28 is a graph illustrating OBSS/PD and transmission power adjustment rules.

SR operation, along with sensitivity adjustment, includes a transmit power limit for all transmissions resulting from a detected SR TXOP (i.e., after ignoring inter-BSS frames given by OBSS/PD-based SR operation). The maximum allowable transmit power ($\text{TX PWR}_{max}$) is defined as follows:

$$\text{TX PWR}_{max} = \text{TX PWR}_{ref} - (\text{OBSS/PD} - \text{OBSS/PD}_{min})$$

The previous equation holds for $\text{OBSS/PD}_{max} \ge \text{OBSS/PD} > \text{OBSS/PD}_{min}$. Otherwise, the maximum transmit power is not limited. By applying a power limit, the OBSS/PD value aims to reduce the impact of simultaneous transmissions caused by SR.

Simply put, the higher the OBSS/PD threshold (more inter-BSS transmissions can be ignored), the lower the transmit power (less interference should be generated). The transmit power limit continues until the end of the SR TXOP identified by the HE node, which starts when the backoff reaches 0. This duration depends on the active transmission period used to detect the SR TXOP.

2) PSR (Parametrized Spatial Reuse)

The PSR operation is defined as an alternative to OBSS/PD-based SR for TB transmissions.

A node utilizing a PSR opportunity identifies a PSR opportunity from a detected TB transmission. On the other hand, the opportunist performs a TB transmission and looks for a transmission holder indicating support for the PSR operation in the header of the Trigger Frame (TF). To identify a PSR opportunity, the opportunist must determine whether it can ignore the TB PPDU following a given TF packet.

To do so, the opportunist's intended transmit power must not exceed the requirements imposed by the transmission holder (encapsulated in the PSR_INPUT parameter).

The opportunist examines the PSR value of the detected TF and transmits during the TB PPDU(s) if the intended transmit power is acceptable (indicated in the Common Info field). In particular, the intended transmit power must be less than the PSR value measured in the legacy part of the TF (i.e., the PHY header) minus the Received Power Level (RPL). The PSR value is calculated as follows:

$$PSR = TX\ PWR_{AP} + I_{AP}^{max}$$

Here, TX PWRAP is the normalized transmit power in dBm at the output of the antenna connector, and $I_{AP}^{max}$ is the normalized value in dB that captures the maximum interference allowed in the transmission holder. Specifically, $I_{AP}^{max}$ is calculated as the target RSSI indicated in the TF minus the minimum SNR that grants a 10% PER (based on the highest MCS used for UL HE TB PPDU transmission). A safety margin (set at the AP) of 5 dB is also included to ensure that it does not exceed this value.

In an 802.11ax wireless LAN system, a HE AP participating in spatial reuse can transmit a Beacon request to request associated non-AP HE STAs to gather information about their neighborhood. The non-AP HE STAs performing spatial reuse respond to the Beacon request with a Beacon report.

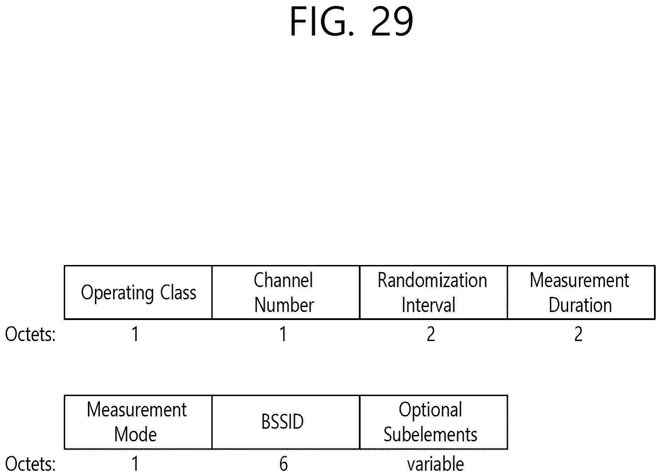

FIG. 29 illustrates an example of the Measurement Request field format of a Beacon request.

The Measurement Request field in FIG. 29 includes an Operating Class field, a Channel Number field, a Randomization Interval field, a Measurement Duration field, a Measurement Mode field, a BSSID field, and an Optional Subelements field.

The Optional Subelements ID of the Beacon request is set as follows:

[Table 2]

| Subelement ID | Name | Extensible |
|---|---|---|
| 0 | SSID | No |
| 1 | Beacon Reporting | Yes |
| 2 | Reporting Detail | Yes |
| 3-9 | Reserved | |
| 10 | Request | No |
| 11 | Extended Request | No |
| 12-50 | Reserved | |
| 51 | AP Channel Report | No |
| 52-162 | Reserved | |
| 163 | Wide Bandwidth Channel Switch | Yes |
| 164 | Last Beacon Report Indication Request | No |
| 165-220 | Reserved | |
| 221 | Vendor Specific | Vendor defined |
| 222-255 | Reserved | |

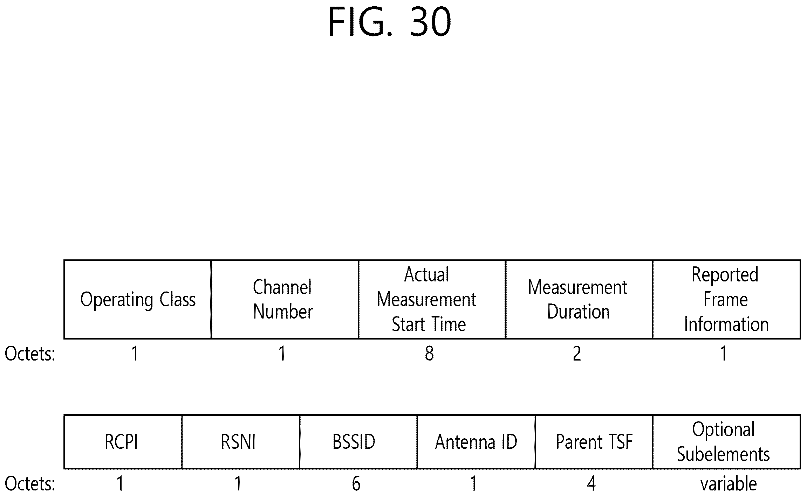

FIG. 30 illustrates an example of the Measurement Report field format of a Beacon report.

The Measurement Report field of FIG. 30 includes the Operating Class field, Channel Number field, Actual Measurement Start field, Measurement Duration field, Reported Frame Information field, RCPI field, RSNI field, BSSID field, Antenna ID field, Parent TSF field, and Optional Subelements field.

The Optional Subelements ID of the Beacon report is set as follows.

[Table 3]

| Subelement ID | Name | Extensible |
|---|---|---|
| 0 | Reserved | |
| 1 | Reported Frame Body | No |
| 2 | Reported Frame Body Fragment ID | No |
| 3-162 | Reserved | |
| 163 | Wide Bandwidth Channel Switch | Yes |
| 164 | Last Beacon Report Indication | No |
| 165-220 | Reserved | |
| 221 | Vendor Specific | Vendor defined |
| 222-225 | Reserved | |

Basically, neighbor channel information is reported by BSS STAs to BSS APs by overhearing management frames, such as beacons, from OBSS AP(s). This specification proposes a method for requesting and reporting channel information for the entire BW band, as well as for specific BWs, RUs, or subchannels.

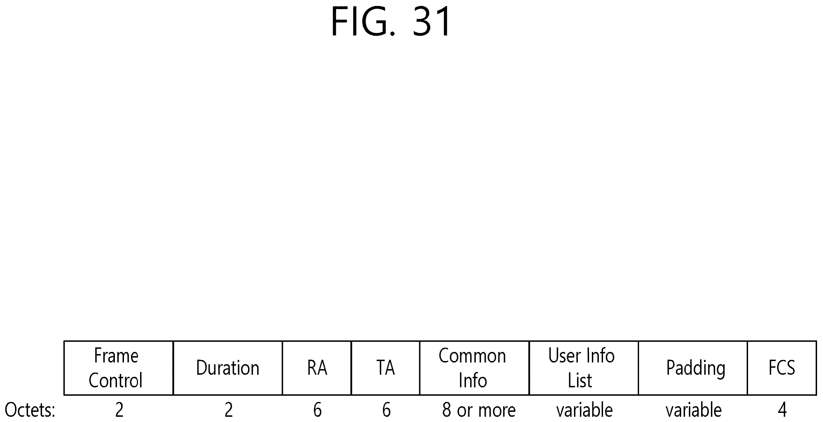

As an example of how to apply, the measurement report field of the existing beacon report (FIG. 31) can provide not only RCPI (Received Channel Power of the Beacon, Measurement Pilot, or Probe Response frame) or RSNI (Received Signal-to-Noise Indication) information for the entire band, but also RCPI or RSNI for RU or Subchannel units. For example, the reserved value of Optional subelements can be used to instruct or report the following information.

For example, if Subelement ID=166, the beacon report reports channel information in units of RU or subchannel (20MHz), or channel information for a frequency range specified in the RU allocation. The reported channel information may be not only information on the existing RCPI or RSNI, but also SINR, Received signal strength indication (RSSI), Rx Power Indicator (RPI), Avg Noise Power Indicator (ANPI), Idle Power Indicator (IPI), Rx Ch Power Indicator (RCPI), Rx Signal to Noise Indicator (RSNI), etc. One or more of the above information may be included in the beacon report.

When this subelement ID is included in a beacon request, the STA must report channel information in units of RU or subchannel (20MHz). The unit of RU or subchannel can be fixed to the default (e.g., 20MHz or 242-tone RU) or indicated with an indicator. Alternatively, the RU allocation subfield can be included in the beacon report to indicate the channel to be reported.

The Beacon report may include this subelement ID and channel information for each RU or subchannel, or channel information for the frequency range specified in the RU allocation. The length of the report frame may vary depending on the number of channel information to be reported. In addition, if disabled subchannel information is included, the information for the subchannel(s) may be omitted from the Beacon report, or the subchannel(s) may be reported as not available (RCPI value=255).

This channel information of OBSS AP(s) can be helpful in more granular SR (Spatial Reuse) operations or multi-AP operations. For example, when applying C-OFDMA between APs in 20MHz units, C-SR can be applied within that 20MHz space. Alternatively, with the introduction of 20MHz punctured subchannels, methods such as transmitting data in SR only in 20MHz units where SR is possible can be applied.

Although it is expressed as OBSS AP here, in case of multi-link operation, it can also be applied to a link where a specific AP or a specific STA in the MLD (Multi-Link Device) does not transmit or receive data or a link where data is not associated. For example, if AP 1 to AP 3 are included in the AP MLD and STA 1 to STA 3 are included in the STA MLD, AP 1 transmits a Beacon request to STA 1 in the STA MLD through link 1, and STA 1 transmits a Beacon report to AP 1, thereby AP 1 can obtain channel information about AP 2 and AP 3 for another link.

Multi-AP configuration can be set based on channel information (MLA control information (RSSI or SNR), measurement report information (RCPI, RSNI, etc.) per RU or subchannel) obtained through the above-described embodiment.

Below, this specification describes a method for performing a sounding procedure after the multi-AP configuration is established. 1) A method for setting OAIDs for non-associated STAs for the NDP sounding procedure to obtain channel information about surrounding APs is described.

This specification proposes a method for setting AIDs and performing the NDP sounding procedure between an OBSS AP and a BSS STA in a Wi-Fi system.

In the current standard, the NDP sounding procedure defines the process by which a BSS AP requests and receives feedback from STAs within the BSS. If a multi-AP technique is introduced, STAs within the BSS may also need channel information from OBSS APs in addition to the BSS AP. Therefore, this specification proposes a method for OBSS APs to perform NDP sounding to BSS STAs. From the perspective of the BSS AP, this can also be applied to the method by which a BSS AP performs NDP sounding to OBSS STA(s). In other words, the procedure described below can be applied to both the NDP sounding procedure between an OBSS AP and a BSS STA, and the NDP sounding procedure between a BSS AP and an OBSS STA.

Although this specification refers to the BSS AP and the OBSS AP, this can also be applied to each link in the MLD.

FIG. 31 illustrates an example of the Trigger Frame format.

A trigger frame requests the transmission of at least one TB PPDU and allocates resources for it. The trigger frame may include other information requested by the responding STA for the transmission of the TB PPDU.

The trigger frame in FIG. 31 includes a Frame Control field, a Duration field, an RA field, a TA field, a Common Info field, a User Info List field, a Padding field, and an FCS field.

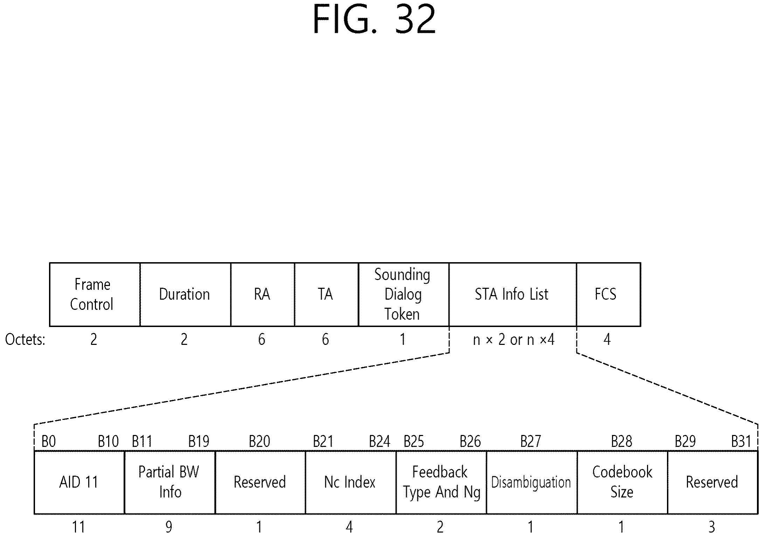

FIG. 32 illustrates an example of the NDP Announcement frame format.

The NDP Announcement frame has three variants: the VHT NDP Announcement frame, the HE NDP Announcement frame, and the EHT NDP Announcement frame. Each variant is distinguished by the configuration of the HE subfield and the Ranging subfield within the Sounding Dialog Token field.

The VHT/HE/EHT NDP Announcement frame contains at least one STA Info field. If the VHT/HE/EHT NDP Announcement frame contains only one STA Info field, the RA field is set to the address of the STA capable of providing feedback. If the VHT/HE/EHT NDP Announcement frame contains more than one STA Info field, the RA field is set to the broadcast address.

The TA field is set to the address of the STA transmitting the VHT/HE/EHT NDP Announcement frame or the bandwidth signaling TA of the STA transmitting the VHT/HE/EHT NDP Announcement frame.

The Resolution subfield of the Partial BW Info subfield indicates the resolution bandwidth for each bit of the Feedback Bitmap subfield. The Feedback Bitmap subfield indicates the request for each resolution bandwidth from the lowest frequency to the highest frequency, with B1 indicating the lowest resolution bandwidth. Each bit of the Feedback Bitmap subfield is set to 1 if feedback is requested for the corresponding resolution bandwidth.

The Resolution bit indicates the feedback resolution bandwidth. The Resolution bit is set to 0 to indicate a resolution of 20 MHz when the BW subfield is set to 0 through 3, and is set to 1 to indicate a resolution of 40 MHz when the BW subfield is set to 4. The Feedback Bitmap subfield indicates each resolution bandwidth for which the beamformer requests feedback. Each bit in the Feedback Bitmap subfield is set to 1 if feedback is requested for the corresponding bandwidth, and 0 otherwise.

When the bandwidth of the EHT NDP Announcement frame is less than 320 MHz, the Resolution bit B0 is set to 0 to indicate a resolution of 20 MHz.

- When the bandwidth of the EHT NDP Announcement frame is 20 MHz, B1 is set to 1 to indicate a feedback request for a 242-tone RU. B2-B8 are reserved and set to 0.
- When the bandwidth of the EHT NDP Announcement frame is 40 MHz, B1 and B2 indicate feedback requests for two 242-tone RUs, from low to high frequency. B3-B8 are reserved and set to 0.
- When the bandwidth of the EHT NDP Announcement frame is 80 MHz, B1-B4 indicate feedback requests for each of the four 242-tone RUs, from low to high frequency. B5-B8 are reserved and set to 0. If B1-B4 are all set to 1, this indicates a feedback request for a 996-tone RU.
- When the bandwidth of the EHT NDP Announcement frame is 160 MHz, B1-B8 indicate feedback requests for each of the eight 242-tone RUs, from low to high frequency. If B1-B4 are all set to 1, this indicates a feedback request for the lower 996-tone RU, and if B5-B8 are all set to 1, this indicates a feedback request for the upper 996-tone RU.

When the bandwidth of the EHT NDP Announcement frame is 320 MHz, the Resolution bit B0 is set to 1 to indicate a resolution of 40 MHz. B1 through B8 represent feedback requests for each of the eight 484-tone RUs from low to high frequency. When B1 and B2 are both set to 1, it represents a feedback request for the lowest 996-tone RU, when B3 and B4 are both set to 1, it represents a feedback request for the second-lowest 996-tone RU, when B5 and B6 are both set to 1, it represents a feedback request for the second-highest 996-tone RU, and when B7 and B8 are both set to 1, it represents a feedback request for the highest 996-tone RU.

The sounding protocol can be described as follows. Since the standardization stage has not yet been finalized, the sounding protocol described below was written for EHT wireless LAN systems, but it can also be applied to UHR wireless LAN systems or next-generation wireless LAN systems.

Transmit beamforming and Downlink Multi-User-Multi-Input-Multi-Output (DL MU-MIMO) require knowledge of the channel conditions to compute a steering matrix applied to the transmitted signal to optimize reception at one or more receivers. The EHT STA determines the channel condition information using the EHT sounding protocol. The EHT sounding protocol provides an explicit feedback mechanism, defined as EHT non-trigger-based (non-TB) sounding and EHT trigger-based (TB) sounding. Here, the EHT beamformee measures the channel using training signals transmitted by the EHT beamformer (i.e., the EHT sounding NDP) and sends back a transformed estimate of the channel condition. The EHT beamformer uses this estimate to derive the steering matrix.

EHT Beamformer returns an estimate of the channel state from an EHT compressed Beamforming/CQI report contained in one or more EHT Compressed Beamforming/CQI frames. There are three types of EHT compressed Beamforming/CQI reports.

- SU Feedback: The EHT Compressed Beamforming/CQI report consists of the EHT Compressed Beamforming Report field.
- MU Feedback: The EHT Compressed Beamforming/CQI report consists of the EHT Compressed Beamforming Report field and the EHT MU Exclusive Beamforming Report field.
- CQI Feedback: The EHT Compressed Beamforming/CQI report consists of the EHT CQI Report field.

Note that the use of EHT TB sounding does not necessarily imply MU feedback. EHT TB sounding is also used to obtain SU feedback and CQI feedback.

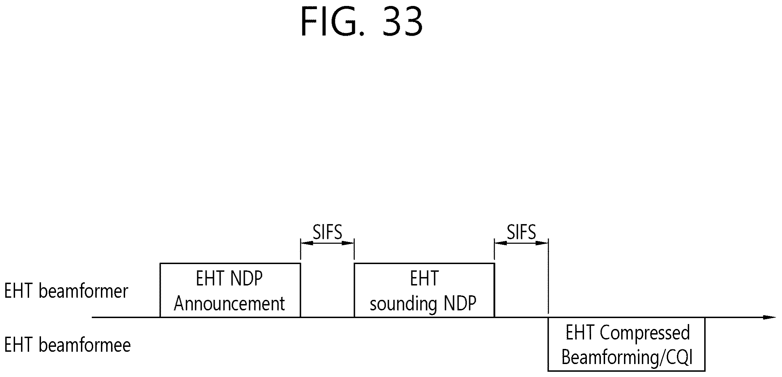

FIG. 33 illustrates an example of EHT non-TB sounding.

The EHT non-TB sounding sequence is initiated by the EHT beamformer using an individually addressed EHT NDP Announcement frame containing exactly one STA information field. After a SIFS, the EHT sounding NDP is performed. The EHT beamformer responds with an EHT Compressed Beamforming/CQI frame after the SIFS.

The AID11 subfield of the STA information field must be set to the AID of the STA identified by the RA field of the EHT NDP Announcement frame, or set to 0 if the STA identified by the RA field is a mesh STA, AP, or IBSS STA.

An example of an EHT non-TB sounding sequence with a single EHT beamformer is shown in FIG. 33.

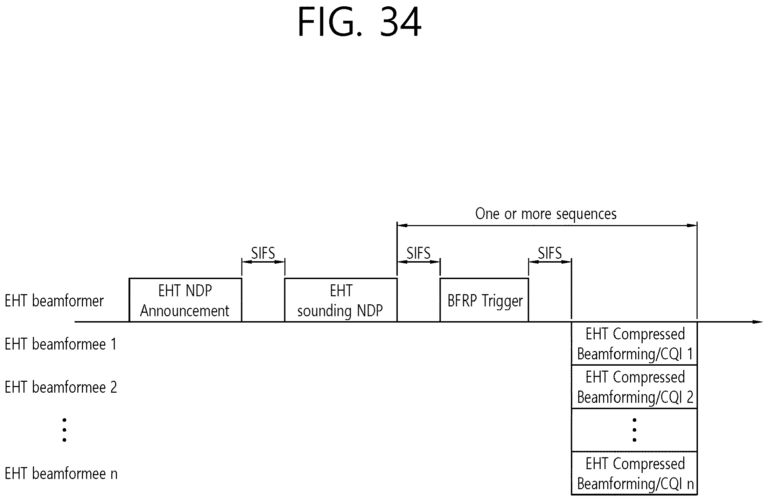

FIG. 34 illustrates an example of EHT TB sounding.

An EHT TB sounding sequence is initiated by the EHT beamformer using a broadcast EHT NDP Announcement frame with two or more STA information fields. An EHT sounding NDP is transmitted after a SIFS, followed by a Beamforming Report Poll (BFRP) trigger frame. Each EHT beamformee responds after a SIFS with an EHT TB PPDU containing one or more EHT Compressed Beamforming/CQI frames. A BFRP trigger frame transmitted within an EHT TB sounding sequence must request an EHT TB PPDU.

An example of an EHT TB sounding sequence with two or more EHT beamformees is shown in FIG. 13.

An EHT beamformer initiating an EHT TB sounding sequence must transmit an EHT NDP Announcement frame containing two or more STA information fields and an RA field set to a broadcast address.

An EHT beamformer may initiate an EHT TB sounding sequence to request SU, MU, or CQI feedback.

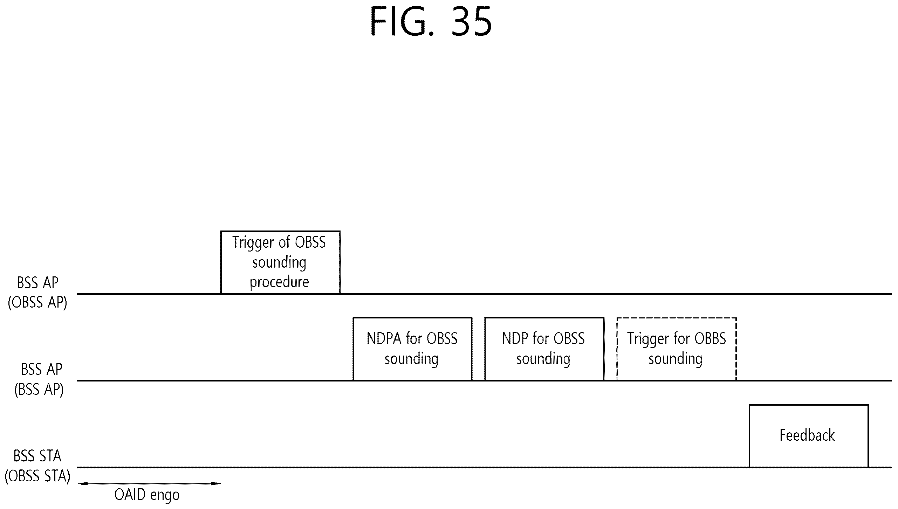

Currently, the 802.11ax and 802.11be standards do not define how OBSS APs apply NDP sounding procedures to BSS STAs. However, OBSS channel information using NDP sounding may be required in the future for reasons such as using multi-AP techniques or more efficiently applying spatial reuse. This can also be applied to NDP sounding on other links for multi-link operation. Therefore, although we will refer to OBSS APs in the future, this can be replaced with links on which STAs do not transmit or receive or are not associated. Furthermore, while the channel value measurement of BSS STAs in response to NDP sounding transmission by an OBSS AP is described below, this can naturally be interpreted and applied as the channel value measurement of OBSS STAs in response to NDP sounding transmission by a BSS AP. (FIG. 35 illustrates both the channel value measurement of BSS STAs in response to NDP sounding transmission by an OBSS AP and the channel value measurement of OBSS STAs in response to NDP sounding transmission by a BSS AP.)

Instead of using AID for AP to recognize (or even transmit/receive) STA(s) in unassociated neighborhood, this specification proposes to use so-called OAID (AID of OBSS STA). That is, just as the STA ID between BSS AP and BSS STA is defined as AID, the STA ID between OBSS AP and BSS STA (or the STA ID between BSS AP and OBSS STA) is agreed upon in advance as OAID. (The term referring to this may be other than OAID (OBSS AID), but it is referred to as OAID in this specification.)

In 802.11az, an ID called RSID is assigned to an unassociated BSS STA and FTM negotiation is performed through the RSID. According to the 802.11az standard, after preassociation security negotiation, the FTM Request frame of the ISTA (Initiating STA) is transmitted and the IFTM frame (Initial FTM frame) of the RSTA (Responding STA) is received to complete the FTM negotiation. Here, the AID/RSID field is included in the TB Specific subelement of the ranging parameter element included in the IFTM frame. If the ISTA is not associated with the RSTA, the AID/RSID field is set to the RSID assigned by the responder to identify the unassociated ISTA, which has the same length as the AID.

This specification defines and utilizes OAID, utilizing this method. Specifically, OAID is used in the NDP sounding procedure for OBSS channel acquisition, enabling the OBSS AP to perform NDP sounding procedures (or even other transmission and reception) with BSS STAs. (Detailed setup, configuration, and allocation of OAIDs are not covered in this specification.)

The OBSS NDP sounding procedure for obtaining OBSS channel information proposed in this specification is as follows. FIGs. 35 to 37 illustrate examples in which the OBSS NDP sounding procedure is applied.

FIG. 35 illustrates an example of an NDP sounding procedure for acquiring OBSS channel information.

The NDP sounding procedure of FIG. 35 largely includes steps 1) to 5).

1) OAID negotiation: The OBSS AP allocates an OAID to recognize the BSS STA.

- While the allocation method and procedure are not detailed in this specification, as an example, the BSS AP can assign an OAID to the BSS STA(s) requiring OBSS channel measurement. The BSS STA(s) requiring OBSS channel measurement may be STAs with Multi-AP capability (or, more specifically, capabilities specific to each Multi-AP technique) or STAs with OBSS channel measurement capability. Alternatively, the BSS STA(s) requiring OBSS channel measurement may be STAs belonging to a group that operates Multi-AP (specific to a specific technique). At this time, OAIDs can be assigned solicited or unsolicited by newly defining a management frame for OBSS channel measurement or by adding subfields or elements (aka OAID assignment frame/(sub)element) to an existing management frame. This OAID information must be shared with the OBSS AP.
- OAID nego is a pre-procedure that must be performed before the OBSS NDP sounding procedure begins.

2) Trigger of OBSS sounding procedure: The BSS AP instructs the OBSS AP(s) and BSS STA(s) to initiate the OBSS sounding procedure. The contents of this instruction frame (trigger frame, see Figure 31) can be as follows.

- The TA address is the BSSID of the BSS. The RA address can be set to broadcast, and a separate indicator called an instruction frame for OBSS sounding can be included. Alternatively, the RA address can be set to a BSSID specifically designated for OBSS sounding.
- The trigger frame must include the ID information of the OBSS AP (e.g., BSSID, BSS color, BSS index of the multi-AP group, etc.). This allows the OBSS AP(s) with their ID information to prepare to transmit NDPA and NDP.
- Using the above information, BSS STA(s) that require OBSS channel measurement among the BSS STA(s) can prepare to receive OBSS sounding and provide feedback. Alternatively, the AID/OAID(s) can be included in the trigger frame to specify the BSS STA(s) that will participate in the OBSS NDP sounding procedure.

This instruction frame (trigger frame) can be used to configure the TXOP (Transmission Opportunity) for the entire OBSS sounding procedure. For example, the MU-RTS Trigger frame can be used to configure the SP (Service Period) interval of the r-TWT (restricted-Target Wakeup Time).

An example of configuring this instruction frame would be to define a new trigger type, setting RA=Broadcast and TA=BSSID. Subfields such as other LTFs within the Common Info field would be set to reserved. Trigger Dependent Common Info could also be defined to include the OBSSID and the AID(s)/OAID(s) of the BSS STAs participating in this OBSS NDP sounding procedure. In this case, the newly defined trigger frame may not include the User Specific field.

Transmission of this instruction frame may be omitted, and procedure 3) may begin immediately.

3) NDPA and NDP for OBSS sounding: The OBSS AP transmits an NDPA (NDP Announcement) frame (see FIG. 32) and NDP sounding.

- At this time, the NDPA's TA address can be set to the BSSID of the OBSS AP. The NDPA's RA address can be set to broadcast or to a BSSID specifically designated for OBSS sounding. In this case, a separate NDPA (and NDP) indicator for OBSS sounding can be included in the NDPA.
- At this time, the AID11 subfield in the NDPA's STA Info field can be set to the AID(s)/OAID(s) included in the indicator in step 2). The NDP's U-SIG (UHR-SIG or next-SIG containing common information) can also use the Validate bit to indicate that it is an NDP for OBSS sounding.
- At this time, NDPA can be transmitted by the BSS AP, and only NDP can be transmitted by the OBSS AP. However, in this case, since the OBSS AP must transmit NDP after SIFS after transmitting NDPA, all transmissions and receptions, including those within the OBSS, must be stopped and prepared in advance. At this time, the BSS AP can only transmit NDPA to the BSS STA.

4) Trigger for OBSS sounding: If there is NDPA and NDP for multiple BSS STAs, the OBSS AP can transmit a Trigger frame to configure the resources to be fed back. Alternatively, since this is a resource allocation for BSS STAs, this Trigger frame can be transmitted by the BSS AP.

5) Feedback: The BSS STA can feedback information about the OBSS channel measured from NDP sounding to the OBSS AP or BSS AP.

Here, the interval between each frame from steps 2) to 5) can be xIFS (or SIFS).

Between steps 3) and 4), the BSS AP may send an Ack message to the OBSS AP indicating that the NDPA and NDP were properly transmitted.

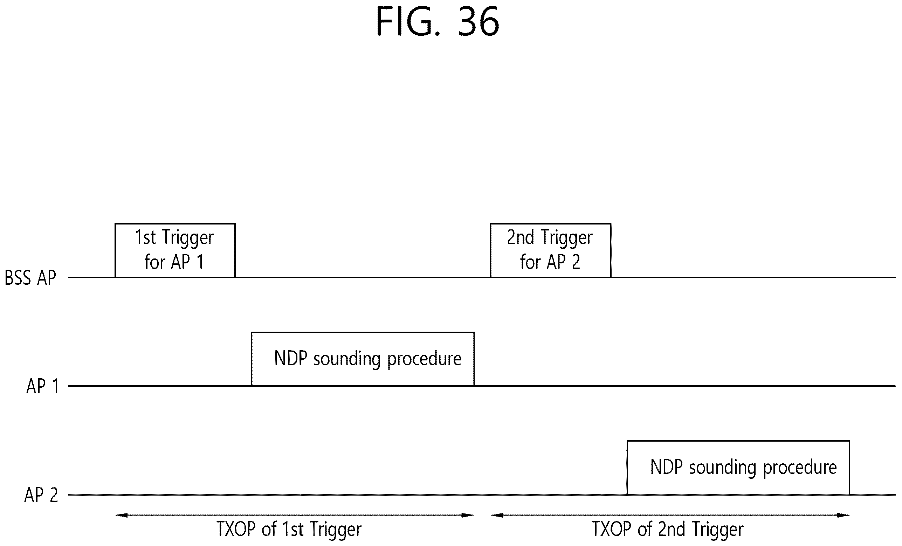

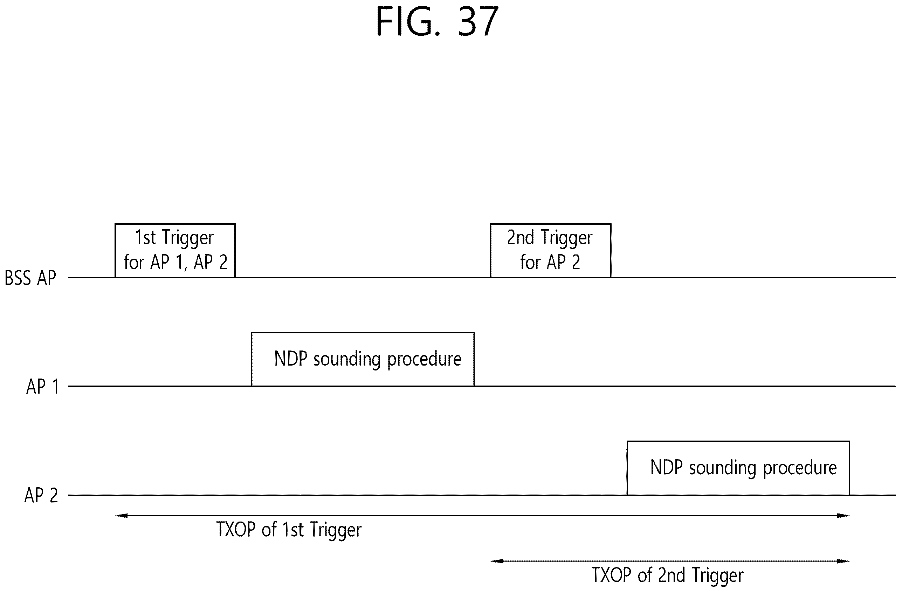

If steps 2) to 5) excluding step 1) are defined as the NDP sounding procedure for OBSS AP(s) (step 1) is a preconfiguration step for the NDP sounding procedure for OBSS AP(s) and only needs to be performed before the NDP sounding procedure), this NDP sounding procedure can be repeated more than once. For example, NDP sounding for multiple OBSS AP(s) can be performed sequentially and repeatedly. Alternatively, NDP sounding can be instructed to multiple OBSS AP(s) at once using the Trigger of step 2) and only steps 3) to 5) can be repeated. However, since the frame may not be audible between OBSS APs and BSS STAs, it may be preferable to repeat from the Trigger of step 2). In other words, after the NDP sounding procedure for one OBSS AP(s) is completed, the BSS AP may transmit an instruction frame for the Trigger again. In this case, the first trigger frame (1st trigger frame) may only include information about the OBSS AP(s) and BSS STA(s) that will perform the sounding procedure immediately after (see the example in FIG. 36). Alternatively, the first trigger frame (1st trigger frame) may include information about both the OBSS AP(s) and BSS STA(s) that will perform the sounding procedure immediately after (see the example in FIG. 37). At this time, the TXOP length, Service Period, or duration may be set to a section that only includes information about the OBSS AP(s) and BSS STA(s) that will perform the sounding procedure immediately after (see the example in FIG. 36), or may be set to a section that includes information about both the OBSS AP(s) and BSS STA(s) that will perform the sounding procedure immediately after (see the example in FIG. 37).

FIG. 36 illustrates an example of an NDP sounding procedure for OBSS APs.

Referring to Figure 36, a BSS AP can sequentially instruct two OBSS APs (AP1 and AP2) to perform an NDP sounding procedure.

First, the BSS AP can transmit a first trigger frame to AP1, establishing the TXOP period of the first trigger frame. During the TXOP period of the first trigger frame, an NDP sounding procedure can be performed between AP1 and a BSS STA.

Additionally, the BSS AP may transmit a second trigger frame to AP2 to set a TXOP period of the second trigger frame. During the TXOP period of the second trigger frame, an NDP sounding procedure may be performed between AP2 and the BSS STA.

FIG. 37 illustrates another example of an NDP sounding procedure for OBSS APs.

Referring to FIG. 37, a BSS AP can sequentially instruct two OBSS APs (AP1 and AP2) to perform an NDP sounding procedure.

First, the BSS AP can transmit a first trigger frame to AP1 and AP2, establishing the TXOP period of the first trigger frame. During the TXOP period of the first trigger frame, an NDP sounding procedure can be performed between AP1 and a BSS STA.

Additionally, the BSS AP may transmit a second trigger frame to AP2, setting the TXOP period of the second trigger frame. During the TXOP period of the second trigger frame, an NDP sounding procedure between AP2 and the BSS STA may be performed.

At this time, the TXOP period of the first trigger frame may include the TXOP period of the second trigger frame. The difference between the example of FIG. 37 and the example of FIG. 36 lies in whether the TXOP period of the first trigger frame is set longer or shorter. A longer TXOP period allows the OBSS NDP sounding procedure to be performed at various points in time.

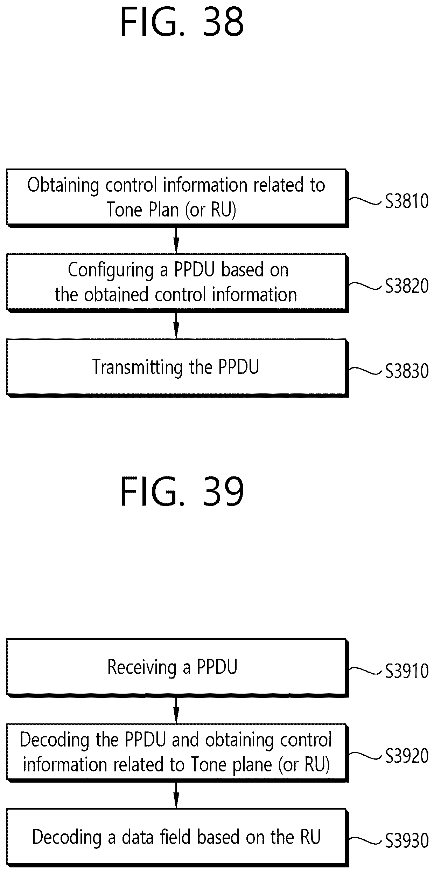

FIG. 38 is a flowchart illustrating the operation of a transmitting device according to the present embodiment.

The example of FIG. 38 may be performed by a transmitting device (AP and/or non-AP STA).

Some of each step (or detailed sub-step to be described later) of the example of FIG. 38 may be skipped/omitted.

Through step S3810, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S3820, the transmitting device may construct/generate a PPDU based on the acquired control information. Configuring/generating the PPDU may include configuring/generating each field of the PPDU. That is, step S3820 includes configuring the EHT-SIG field including control information about the tone plan. That is, step S3820 includes configuring a field including control information (e.g., N bitmap) indicating the size/position of the RU; and/or configuring a field including an identifier of an STA receiving the RU (e.g., AID).

Also, step S3820 may include generating an STF/LTF sequence transmitted through a specific RU. The STF/LTF sequence may be generated based on a preset STF generation sequence/LTF generation sequence.

Also, step S3820 may include generating a data field (i.e., MPDU) transmitted through a specific RU.

The transmitting device may transmit the PPDU constructed through step S3820 to the receiving device based on step S3830.

While performing step S3830, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 39 is a flowchart illustrating the operation of the receiving apparatus/device according to the present embodiment.

The aforementioned PPDU may be received according to the example of FIG. 39.

The example of FIG. 39 may be performed by a receiving apparatus/device (AP and/or non-AP STA).

Some of each step (or detailed sub-step to be described later) of the example of FIG. 39 may be skipped/omitted.

The receiving device (receiving STA) may receive all or part of the PPDU through step S3910. The received signal may be in the form of FIG. 5.

A sub-step of step S3910 may be determined based on step S3830 of FIG. 38. That is, in step S3910, an operation of restoring the result of the CSD, Spatial Mapping, IDFT/IFFT operation, and GI insertion operation applied in step S3830 may be performed.

In step S3920, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S3930, the receiving device may decode the remaining part of the PPDU based on information about the tone plan (i.e., RU) acquired through step S3920. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S3930 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 39.

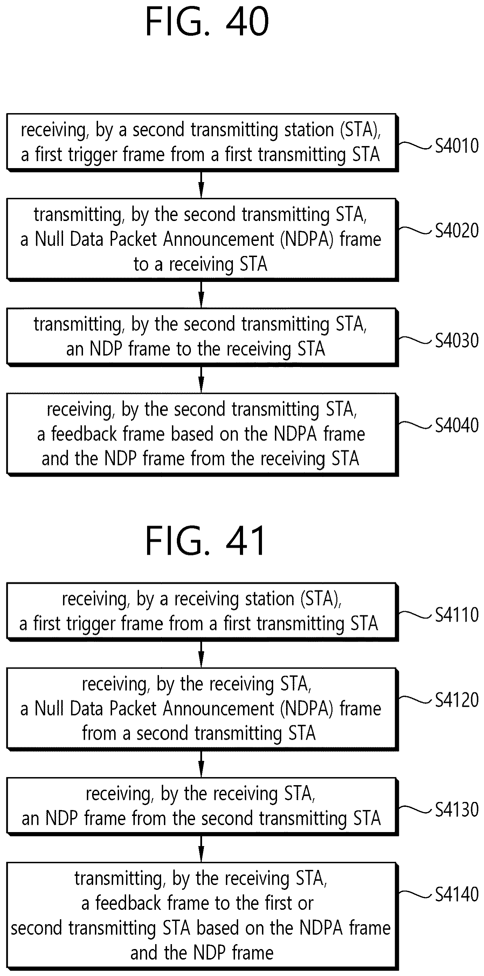

FIG. 40 is a flowchart illustrating a procedure for an OBSS AP to perform an OBSS sounding procedure with a BSS STA according to the present embodiment.

The example of FIG. 40 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The example of FIG. 40 is performed at a transmitting STA, which may correspond to a beamformer or an access point (AP). The receiving STA of FIG. 40 may correspond to a beamformee or at least one STA (station).

This embodiment proposes a method for an OBSS AP to perform an NDP sounding procedure for BSS STAs, or for a BSS AP to perform an NDP sounding procedure for OBSS STAs. In particular, this embodiment proposes a method for setting IDs for non-associated STAs to feed back or receive feedback on information for an OBSS channel.

In step S4010, a second transmitting station (STA) receives a first trigger frame from a first transmitting STA.

In step S4020, the second transmitting STA transmits a Null Data Packet Announcement (NDPA) frame to a receiving STA.

In step S4030, the second transmitting STA transmits an NDP frame to the receiving STA.

In step S4040, the second transmitting STA receives a feedback frame based on the NDPA frame and the NDP frame from the receiving STA.

The receiving STA is a Basic Service Set (BSS) STA, the first transmitting STA is a BSS AP, and the second transmitting STA is an Overlapping Basic Service Set (OBSS) AP.

The first trigger frame includes information for an OBSS Association Identifier (OAID). The OAID is information for the second transmitting STA to identify the receiving STA. The NDPA frame, the NDP frame, and the feedback frame are transmitted and received based on the OAID.

That is, the present embodiment proposes a method for setting an OAID to perform a sounding procedure for the receiving STA that is unassociated with the second transmitting STA. There is an effect that the BSS AP can more accurately and quickly obtain channel information for the neighboring APs (OBSS APs) of the BSS STA (or the OBSS AP can obtain channel information for the neighboring APs (BSS APs) of the OBSS STA) so that multi-AP operations (especially, Coordinated-BeamForming (C-BF) or Joint-Transmission (J-TX) etc.) can be performed more efficiently.

Negotiation for the OAID may be performed between the first transmitting STA and the receiving STA. The negotiation for the OAID may be performed before the first trigger frame is transmitted. In other words, the negotiation for the OAID is a preliminary procedure that must be performed before the OBSS sounding procedure begins. Thereafter, information for the OAID may be shared with the second transmitting STA.

The first trigger frame may include a first Transmitter Address (TA) field and a first Receiver Address (RA) field. The first TA field may include a Basic Service Set Identifier (BSSID) of the first transmitting STA. The first RA field may be set to a broadcast address and includes a first indicator field. The first indicator field may include information on that the first trigger frame is a frame for sounding between the second transmitting STA and the receiving STA.

The information for the OAID may include ID information of the second transmitting STA. The ID information of the second transmitting STA may include BSSID, BSS color, or BSS index of a multi-AP group. The NDPA frame and the NDP frame may be transmitted by the second transmitting STA based on the OAID. The second transmitting STA, which has confirmed its own ID information from the information for the OAID, can prepare to transmit the NDPA frame and the NDP frame.

The receiving STA may be identified as a BSS STA that will receive the NDPA frame and the NDP frame based on the OAID.

The first trigger frame may include allocation information for a transmission opportunity (TXOP) or Service Period (SP) for transmitting and receiving the NDPA frame, the NDP frame, and the feedback frame. If the first trigger frame is a Multi User-Request To Send (MU-RTS) trigger frame, an SP duration of restricted-Target Wakeup Time (r-TWT) may be set to transmit and receive the NDPA frame, the NDP frame, and the feedback frame.

Additionally, the first trigger frame may include the first TA field, the first RA field, and a common information field, and may not include a user information field. At this time, a trigger dependent common information subfield within the common information field may be defined to include the OBSSID and the AID or OAID of the BSS STAs that will participate in the OBSS sounding procedure. At this time, other subfields within the common information field may be reserved.

The NDPA frame may include a second TA field, a second RA field, and an AID11 subfield. The second TA field may include a BSSID of the second transmitting STA. The second RA field may be set to a broadcast address or may include a BSSID separately designated for sounding between the second transmitting STA and the receiving STA. The AID11 subfield may be set to the OAID.

The second transmitting STA may transmit a second trigger frame to the receiving STA. The second trigger frame may be a Beamforming Report Poll (BFRP) trigger frame for setting resources to be fed back based on the receiving STA being a plurality of STAs. The feedback frame may include information for an OBSS channel between the second transmitting STA and the receiving STA.

The above-described OBSS sounding procedure can sequentially perform NDP sounding when multiple OBSS APs exist. It is assumed that the multiple OBSS APs include not only the second transmitting STA but also a third transmitting STA (another OBSS AP).

The third transmitting STA may receive a third trigger frame from the first transmitting STA. The third transmitting STA may transmit a (separate) NDPA frame to the receiving STA. The third transmitting STA may transmit a (separate) NDP frame to the receiving STA. The third transmitting STA may receive a (separate) feedback frame based on the NDPA frame and the NDP frame from the receiving STA.

The third trigger frame may include information for a (separate) OAID. The OAID may be information for the third transmitting STA to identify the receiving STA. The NDPA frame, the NDP frame, and the feedback frame may be transmitted and received based on the OAID.

The third trigger frame may include allocation information for a TXOP or SP for transmitting and receiving the NDPA frame, the NDP frame, and the feedback frame (between the third transmitting STA and the receiving STA).

That is, an OBSS sounding procedure may be performed between the second transmitting STA and the receiving STA during the duration allocated by the first trigger frame, and an OBSS sounding procedure may be performed between the third transmitting STA and the receiving STA during the duration allocated by the third trigger frame. The duration allocated by the third trigger frame may be set after the duration allocated by the first trigger frame. Alternatively, the duration allocated by the third trigger frame may be set within the duration allocated by the first trigger frame.

The NDP frame can be defined as a variant of an Extremely High Throughput (EHT) Multi User (MU) PPDU or a variant of an UHR MU PPDU.

FIG. 41 is a flowchart illustrating a procedure for a BSS STA to perform an OBSS sounding procedure with an OBSS AP according to the present embodiment.

The example of FIG. 41 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The example of FIG. 41 is performed at a receiving STA, which may correspond to a beamformee or at least one STA (station). The transmitting STA of FIG. 41 may correspond to a beamformer or an AP (access point).

This embodiment proposes a method for an OBSS AP to perform an NDP sounding procedure for BSS STAs, or for a BSS AP to perform an NDP sounding procedure for OBSS STAs. In particular, this embodiment proposes a method for setting IDs for non-associated STAs to feed back or receive feedback on information for an OBSS channel.

In step S4110, a receiving station (STA) receives a first trigger frame from a first transmitting STA.

In step S4120, the receiving STA receives a Null Data Packet Announcement (NDPA) frame from a second transmitting STA

In step S4130, the receiving STA receives an NDP frame from the second transmitting STA.

In step S4140, the receiving STA transmits a feedback frame to the first or second transmitting STA based on the NDPA frame and the NDP frame.

The receiving STA is a Basic Service Set (BSS) STA, the first transmitting STA is a BSS AP, and the second transmitting STA is an Overlapping Basic Service Set (OBSS) AP.

The first trigger frame includes information for an OBSS Association Identifier (OAID). The OAID is information for the second transmitting STA to identify the receiving STA. The NDPA frame, the NDP frame, and the feedback frame are transmitted and received based on the OAID.

That is, the present embodiment proposes a method for setting an OAID to perform a sounding procedure for the receiving STA that is unassociated with the second transmitting STA. There is an effect that the BSS AP can more accurately and quickly obtain channel information for the neighboring APs (OBSS APs) of the BSS STA (or the OBSS AP can obtain channel information for the neighboring APs (BSS APs) of the OBSS STA) so that multi-AP operations (especially, Coordinated-BeamForming (C-BF) or Joint-Transmission (J-TX) etc.) can be performed more efficiently.

Negotiation for the OAID may be performed between the first transmitting STA and the receiving STA. The negotiation for the OAID may be performed before the first trigger frame is transmitted. In other words, the negotiation for the OAID is a preliminary procedure that must be performed before the OBSS sounding procedure begins. Thereafter, information for the OAID may be shared with the second transmitting STA.

The first trigger frame may include a first Transmitter Address (TA) field and a first Receiver Address (RA) field. The first TA field may include a Basic Service Set Identifier (BSSID) of the first transmitting STA. The first RA field may be set to a broadcast address and includes a first indicator field. The first indicator field may include information on that the first trigger frame is a frame for sounding between the second transmitting STA and the receiving STA.

The information for the OAID may include ID information of the second transmitting STA. The ID information of the second transmitting STA may include BSSID, BSS color, or BSS index of a multi-AP group. The NDPA frame and the NDP frame may be transmitted by the second transmitting STA based on the OAID. The second transmitting STA, which has confirmed its own ID information from the information for the OAID, can prepare to transmit the NDPA frame and the NDP frame.

The receiving STA may be identified as a BSS STA that will receive the NDPA frame and the NDP frame based on the OAID.

The first trigger frame may include allocation information for a transmission opportunity (TXOP) or Service Period (SP) for transmitting and receiving the NDPA frame, the NDP frame, and the feedback frame. If the first trigger frame is a Multi User-Request To Send (MU-RTS) trigger frame, an SP duration of restricted-Target Wakeup Time (r-TWT) may be set to transmit and receive the NDPA frame, the NDP frame, and the feedback frame.

Additionally, the first trigger frame may include the first TA field, the first RA field, and a common information field, and may not include a user information field. At this time, a trigger dependent common information subfield within the common information field may be defined to include the OBSSID and the AID or OAID of the BSS STAs that will participate in the OBSS sounding procedure. At this time, other subfields within the common information field may be reserved.

The NDPA frame may include a second TA field, a second RA field, and an AID11 subfield. The second TA field may include a BSSID of the second transmitting STA. The second RA field may be set to a broadcast address or may include a BSSID separately designated for sounding between the second transmitting STA and the receiving STA. The AID11 subfield may be set to the OAID.

The second transmitting STA may transmit a second trigger frame to the receiving STA. The second trigger frame may be a Beamforming Report Poll (BFRP) trigger frame for setting resources to be fed back based on the receiving STA being a plurality of STAs. The feedback frame may include information for an OBSS channel between the second transmitting STA and the receiving STA.

The above-described OBSS sounding procedure can sequentially perform NDP sounding when multiple OBSS APs exist. It is assumed that the multiple OBSS APs include not only the second transmitting STA but also a third transmitting STA (another OBSS AP).

The third transmitting STA may receive a third trigger frame from the first transmitting STA. The third transmitting STA may transmit a (separate) NDPA frame to the receiving STA. The third transmitting STA may transmit a (separate) NDP frame to the receiving STA. The third transmitting STA may receive a (separate) feedback frame based on the NDPA frame and the NDP frame from the receiving STA.

The third trigger frame may include information for a (separate) OAID. The OAID may be information for the third transmitting STA to identify the receiving STA. The NDPA frame, the NDP frame, and the feedback frame may be transmitted and received based on the OAID.

The third trigger frame may include allocation information for a TXOP or SP for transmitting and receiving the NDPA frame, the NDP frame, and the feedback frame (between the third transmitting STA and the receiving STA).

That is, an OBSS sounding procedure may be performed between the second transmitting STA and the receiving STA during the duration allocated by the first trigger frame, and an OBSS sounding procedure may be performed between the third transmitting STA and the receiving STA during the duration allocated by the third trigger frame. The duration allocated by the third trigger frame may be set after the duration allocated by the first trigger frame. Alternatively, the duration allocated by the third trigger frame may be set within the duration allocated by the first trigger frame.

The NDP frame can be defined as a variant of an Extremely High Throughput (EHT) Multi User (MU) PPDU or a variant of an UHR MU PPDU.

< Device configuration>

The technical features of the present disclosure may be applied to various devices and methods. For example, the technical features of the present disclosure may be performed/supported through the device(s) of FIG. 1 and/or FIG. 13. For example, the technical features of the present disclosure may be applied to only part of FIG. 1 and/or FIG. 13. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 13. For example, the device according to the present disclosure receives a first trigger frame from a first transmitting station (STA); receives a Null Data Packet Announcement (NDPA) frame from a second transmitting STA; receives an NDP frame from the second transmitting STA; and transmits a feedback frame to the first or second transmitting STA based on the NDPA frame and the NDP frame.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a first trigger frame from a first transmitting station (STA); receiving a Null Data Packet Announcement (NDPA) frame from a second transmitting STA; receiving an NDP frame from the second transmitting STA; and transmitting a feedback frame to the first or second transmitting STA based on the NDPA frame and the NDP frame. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 13. Meanwhile, the CRM of the present disclosure may be the memory 112, 122 of FIG. 1, the memory 620 of FIG. 13, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

**Claims**

1. A method in a wireless local area network (WLAN) system, the method comprising:

   receiving, by a receiving station (STA), a first trigger frame from a first transmitting STA;
   receiving, by the receiving STA, a Null Data Packet Announcement (NDPA) frame from a second transmitting STA;
   receiving, by the receiving STA, an NDP frame from the second transmitting STA; and
   transmitting, by the receiving STA, a feedback frame to the first or second transmitting STA based on the NDPA frame and the NDP frame,
   wherein the receiving STA is a Basic Service Set (BSS) STA, the first transmitting STA is a BSS AP, and the second transmitting STA is an Overlapping Basic Service Set (OBSS) AP,
   wherein the first trigger frame includes information for an OBSS Association Identifier (OAID),
   wherein the OAID is information for the second transmitting STA to identify the receiving STA, and
   wherein the NDPA frame, the NDP frame, and the feedback frame are transmitted and received based on the OAID.

2. The method of claim 1, further comprising:

   performing, by the receiving STA, negotiation for the OAID with the first transmitting STA,
   wherein the negotiation for the OAID is performed before the first trigger frame is transmitted, and
   wherein information for the OAID is shared with the second transmitting STA.

3. The method of claim 1, wherein the first trigger frame includes a first Transmitter Address (TA) field and a first Receiver Address (RA) field,

   wherein the first TA field includes a Basic Service Set Identifier (BSSID) of the first transmitting STA,
   wherein the first RA field is set to a broadcast address and includes a first indicator field,
   wherein the first indicator field includes information on that the first trigger frame is a frame for sounding between the second transmitting STA and the receiving STA.

4. The method of claim 1, wherein the information for the OAID includes ID information of the second transmitting STA,

wherein the NDPA frame and the NDP frame are transmitted by the second transmitting STA based on the OAID, and

wherein the receiving STA is identified as a BSS STA that will receive the NDPA frame and the NDP frame based on the OAID.

5. The method of claim 1, wherein the first trigger frame includes allocation information for a transmission opportunity (TXOP) or Service Period (SP) for transmitting and receiving the NDPA frame, the NDP frame, and the feedback frame.

6. The method of claim 1, wherein the NDPA frame includes a second TA field, a second RA field, and an AID11 subfield,

wherein the second TA field includes a BSSID of the second transmitting STA,
wherein the second RA field is set to a broadcast address or includes a BSSID separately designated for sounding between the second transmitting STA and the receiving STA, and
wherein the AID11 subfield is set to the OAID.

7. The method of claim 1, further comprising:

receiving, by the receiving STA, a second trigger frame from the second transmitting STA,
wherein the second trigger frame is a Beamforming Report Poll (BFRP) trigger frame for setting resources to be fed back based on the receiving STA being a plurality of STAs, and
wherein the feedback frame includes information for an OBSS channel between the second transmitting STA and the receiving STA.

8. A receiving station (STA) in a wireless local area network (WLAN) system, the receiving STA comprising:

a memory;
a transceiver; and
a processor being operatively connected to the memory and the transceiver,
wherein the processor is configured to:

receive a first trigger frame from a first transmitting STA;
receive a Null Data Packet Announcement (NDPA) frame from a second transmitting STA;
receive an NDP frame from the second transmitting STA; and
transmit a feedback frame to the first or second transmitting STA based on the NDPA frame and the NDP frame,
wherein the receiving STA is a Basic Service Set (BSS) STA, the first transmitting STA is a BSS AP, and the second transmitting STA is an Overlapping Basic Service Set (OBSS) AP,
wherein the first trigger frame includes information for an OBSS Association Identifier (OAID),
wherein the OAID is information for the second transmitting STA to identify the receiving STA, and
wherein the NDPA frame, the NDP frame, and the feedback frame are transmitted and received based on the OAID.

9. A method in a wireless local area network (WLAN) system, the method comprising:

receiving, by a second transmitting station (STA), a first trigger frame from a first transmitting STA;
transmitting, by the second transmitting STA, a Null Data Packet Announcement (NDPA) frame to a receiving STA;
transmitting, by the second transmitting STA, an NDP frame to the receiving STA; and
receiving, by the second transmitting STA, a feedback frame based on the NDPA frame and the NDP frame from the receiving STA,
wherein the receiving STA is a Basic Service Set (BSS) STA, the first transmitting STA is a BSS AP, and the second transmitting STA is an Overlapping Basic Service Set (OBSS) AP,
wherein the first trigger frame includes information for an OBSS Association Identifier (OAID),
wherein the OAID is information for the second transmitting STA to identify the receiving STA, and
wherein the NDPA frame, the NDP frame, and the feedback frame are transmitted and received based on the OAID.

**10.** The method of claim 9, wherein negotiation for the OAID is performed between the first transmitting STA and the receiving STA,

wherein the negotiation for the OAID is performed before the first trigger frame is transmitted, and
wherein information for the OAID is shared with the second transmitting STA.

**11.** The method of claim 9, wherein the first trigger frame includes a first Transmitter Address (TA) field and a first Receiver Address (RA) field,

wherein the first TA field includes a Basic Service Set Identifier (BSSID) of the first transmitting STA,
wherein the first RA field is set to a broadcast address and includes a first indicator field,
wherein the first indicator field includes information on that the first trigger frame is a frame for sounding between the second transmitting STA and the receiving STA.

**12.** The method of claim 9, wherein the information for the OAID includes ID information of the second transmitting STA,

wherein the NDPA frame and the NDP frame are transmitted by the second transmitting STA based on the OAID, and
wherein the receiving STA is identified as a BSS STA that will receive the NDPA frame and the NDP frame based on the OAID.

**13.** The method of claim 9, wherein the first trigger frame includes allocation information for a transmission opportunity (TXOP) or Service Period (SP) for transmitting and receiving the NDPA frame, the NDP frame, and the feedback frame.

**14.** The method of claim 9, wherein the NDPA frame includes a second TA field, a second RA field, and an AID11 subfield,

wherein the second TA field includes a BSSID of the second transmitting STA,
wherein the second RA field is set to a broadcast address or includes a BSSID separately designated for sounding between the second transmitting STA and the receiving STA, and
wherein the AID11 subfield is set to the OAID.

**15.** The method of claim 9, further comprising:

transmitting, by the second transmitting STA, a second trigger frame to the receiving STA,
wherein the second trigger frame is a Beamforming Report Poll (BFRP) trigger frame for setting resources to be fed back based on the receiving STA being a plurality of STAs, and
wherein the feedback frame includes information for an OBSS channel between the second transmitting STA and the receiving STA.

**16.** A second transmitting station (STA) in a wireless local area network (WLAN) system, the second transmitting STA comprising:

a memory;
a transceiver; and
a processor being operatively connected to the memory and the transceiver,
wherein the processor is configured to:

receive a first trigger frame from a first transmitting STA;
transmit a Null Data Packet Announcement (NDPA) frame to a receiving STA;
transmit an NDP frame to the receiving STA; and
receive a feedback frame based on the NDPA frame and the NDP frame from the receiving STA,
wherein the receiving STA is a Basic Service Set (BSS) STA, the first transmitting STA is a BSS AP, and the second transmitting STA is an Overlapping Basic Service Set (OBSS) AP,
wherein the first trigger frame includes information for an OBSS Association Identifier (OAID),
wherein the OAID is information for the second transmitting STA to identify the receiving STA, and
wherein the NDPA frame, the NDP frame, and the feedback frame are transmitted and received based on the OAID.

17. A computer readable medium including an instruction being executed by at least one processor and performing a method comprising the steps of:

receiving a first trigger frame from a first transmitting station (STA);

receiving a Null Data Packet Announcement (NDPA) frame from a second transmitting STA;

receiving an NDP frame from the second transmitting STA; and

transmitting a feedback frame to the first or second transmitting STA based on the NDPA frame and the NDP frame,

wherein a receiving STA is a Basic Service Set (BSS) STA, the first transmitting STA is a BSS AP, and the second transmitting STA is an Overlapping Basic Service Set (OBSS) AP,

wherein the first trigger frame includes information for an OBSS Association Identifier (OAID),

wherein the OAID is information for the second transmitting STA to identify the receiving STA, and

wherein the NDPA frame, the NDP frame, and the feedback frame are transmitted and received based on the OAID.

18. A device in a wireless local area network (WLAN) system, the device comprising:

a memory; and

a processor being operatively connected to the memory,

wherein the processor is configured to:

receive a first trigger frame from a first transmitting station (STA);

receive a Null Data Packet Announcement (NDPA) frame from a second transmitting STA;

receive an NDP frame from the second transmitting STA; and

transmit a feedback frame to the first or second transmitting STA based on the NDPA frame and the NDP frame,

wherein a receiving STA is a Basic Service Set (BSS) STA, the first transmitting STA is a BSS AP, and the second transmitting STA is an Overlapping Basic Service Set (OBSS) AP,

wherein the first trigger frame includes information for an OBSS Association Identifier (OAID),

wherein the OAID is information for the second transmitting STA to identify the receiving STA, and

wherein the NDPA frame, the NDP frame, and the feedback frame are transmitted and received based on the OAID.

# FIG. 1

110

120

1st STA

113                    111

Transceiver —— Processor

112

Memory

2nd STA

123                    121

Transceiver —— Processor

122

Memory

(a)

110

120

113 — Transceiver

114 — Processing Chip

111 — Processor

112 — Memory

115 — Software Code

Transceiver — 123

Processing Chip — 124

Processor — 121

Memory — 122

Software Code — 125

(b)

# FIG. 2

# FIG. 3

# FIG. 4

AP MLD

| AP 1 2.4 GHz | AP 2 5 GHz | AP 3 6 GHz |

Association Request frame

2.4 GHz WM

Association Response frame

5 GHz WM

6 GHz WM

Non-AP STA 1 | Non-AP STA 2 | Non-AP STA 3

Non-AP MLD

Successful multi-link setup

AP MLD

| AP 1 2.4 GHz | AP 2 5 GHz | AP 3 6 GHz |

Link 1 2.4 GHz WM

Link 2 5 GHz WM

Link 3 6 GHz WM

Non-AP STA 1 | Non-AP STA 2 | Non-AP STA 3

Non-AP MLD

# FIG. 5

EP 4 661 312 A1

| 8μs | 8μs | 4μs | 4μs | | | | | |
|---|---|---|---|---|---|---|---|---|
| L-LTF | L-STF | L-SIG | RL-SIG | U-SIG | UHR-SIG | UHR-STF | UHR-LTF | Data |

# FIG. 6

# FIG. 7

EP 4 661 312 A1

# FIG. 8

# FIG. 9

# FIG. 10

EP 4 661 312 A1

# FIG. 11

EP 4 661 312 A1

FIG. 12

# FIG. 13

# FIG. 14

STX

# FIG. 15

C-OFDMA

# FIG. 16

CBF

# FIG. 17

AP selection

# FIG. 18

JTX

# FIG. 19

# FIG. 20

| Control List | Padding |
|---|---|
| variable | 0 or more |

Bits:

| Control ID | Control Information |
|---|---|
| 4 | variable |

B0          B3

# FIG. 21

EP 4 661 312 A1

| B0 | B1 | B2 | B4 B5 | B8 B9 | B16 |
|---|---|---|---|---|---|
| Unsolicited MFB | MRQ/UL EHT TB PPDU MFB | NSS | EHT-MCS | RU Allocation | |

Bits:   1   1   3   4   8

| B17 | B18 | B20 B21 | B23 B24 | B25 |
|---|---|---|---|---|
| PS160 | BW | MSI/Partial PPDU Parameters | TX beamforming | HLA/ELA |

Bits:   1   3   3   1   1

# FIG. 22

< When requesting MLA>

| Control ID (4bits) =9: MLA | MRQ (1bit) =0: Request | Reserved (25bits) |
|---|---|---|

< When responding MLA>

| Control ID (4bits) =9: MLA | MRQ (1bit) =1: Response | RSSI (8bits) | Reserved (17bits) |
|---|---|---|---|

# FIG. 23

EP 4 661 312 A1

< When requesting MLA>

| Control ID (4bits) =9: MLA | MRQ (1bit) =0: Request | BSS Color1 (6bits) | Reserved (2bits) | BSS Color2 (6bits) | Reserved (2bits) | BSS Color3 (6bits) | Reserved (2bits) | Reserved (1bit) |
|---|---|---|---|---|---|---|---|---|

< When responding MLA>

| Control ID (4bits) =9: MLA | MRQ (1bit) =1: Response | RSSI1 (8bits) | RSSI2 (8bits) | RSSI3 (8bits) | Reserved (1bit) |
|---|---|---|---|---|---|

# FIG. 24

< When requesting MLA>

| Control ID (4bits) =9: MLA | MRQ (1bit) =0: Request | Reserved (25bit) |
|---|---|---|

< When responding MLA>

| Control ID (4bits) =9: MLA | MRQ (1bit) =1: Response | BSS Color1 (6bits) | RSSI1 (6bits) | BSS Color2 (6bits) | RSSI2 (6bits) | End flag (1bit) =0: Continued |
|---|---|---|---|---|---|---|
| Control ID (4bits) =9: MLA | MRQ (1bit) =1: Response | BSS Color3 (6bits) | RSSI3 (6bits) | BSS Color4 (6bits) | RSSI4 (6bits) | End flag (1bit) =1: End |

EP 4 661 312 A1

# FIG. 25

EP 4 661 312 A1

< When responding MLA>

| Control ID (4bits) =9: MLA | MRQ (1bit) =1: Response | MAID (4~6bits) | AP index (2~4bits) | RU allocation (8~9bits) | RSSI (8bits) | End flag (1bit) =0: Continued |
|---|---|---|---|---|---|---|
| Control ID (4bits) =9: MLA | MRQ (1bit) =1: Response | MAIP (4~6bits) | AP index (2~4bits) | RU allocation (8~9bits) | RSSI (8bits) | End flag (1bit) =1: End |

# FIG. 26

# FIG. 27

AP$_A$ detects a
transmission from AP$_B$

Channel busy | Channel free

PLCP

Preamble | Header

PSDU

Signal below
the OBSS/PD

Signal above
the CCA/CS

Signal above
the RX sensitivity

STA$_B$

AP$_B$

STA$_A$  AP$_A$

-90 dBm
-82 dBm
-72 dBm

☐ : Antenna RX sensitivity        ----▶ : OBSS interference

▨ : CCA/CS        ──▶ : Detected signal level

▨ : OBSS/PD

EP 4 661 312 A1

# FIG. 28

# FIG. 29

| Operating Class | Channel Number | Randomization Interval | Measurement Duration |
|---|---|---|---|
| 1 | 1 | 2 | 2 |

Octets:

| Measurement Mode | BSSID | Optional Subelements |
|---|---|---|
| 1 | 6 | variable |

Octets:

# FIG. 30

EP 4 661 312 A1

| Operating Class | Channel Number | Actual Measurement Start Time | Measurement Duration | Reported Frame Information |
|---|---|---|---|---|
| Octets: 1 | 1 | 8 | 2 | 1 |

| RCPI | RSNI | BSSID | Antenna ID | Parent TSF | Optional Subelements |
|---|---|---|---|---|---|
| Octets: 1 | 1 | 6 | 1 | 4 | variable |

# FIG. 31

EP 4 661 312 A1

| Frame Control | Duration | RA | TA | Common Info | User Info List | Padding | FCS |
|---|---|---|---|---|---|---|---|
| 2 | 2 | 6 | 6 | 8 or more | variable | variable | 4 |

Octets:

# FIG. 32

EP 4 661 312 A1

| Frame Control | Duration | RA | TA | Sounding Dialog Token | STA Info List | FCS |
|---|---|---|---|---|---|---|
| 2 | 2 | 6 | 6 | 1 | n × 2 or n ×4 | 4 |

Octets:

| B0    B10 | B11    B19 | B20 | B21    B24 | B25    B26 | B27 | B28 | B29    B31 |
|---|---|---|---|---|---|---|---|
| AID 11 | Partial BW Info | Reserved | Nc Index | Feedback Type And Ng | Disambiguation | Codebook Size | Reserved |
| 11 | 9 | 1 | 4 | 2 | 1 | 1 | 3 |

# FIG. 33

EP 4 661 312 A1

EHT beamformer

EHT NDP Announcement

SIFS

EHT sounding NDP

SIFS

EHT beamformee

EHT Compressed Beamforming/CQI

# FIG. 34

One or more sequences

| EHT beamformer | | SIFS | | SIFS | | SIFS | |
|---|---|---|---|---|---|---|---|

EHT NDP Announcement

EHT sounding NDP

BFRP Trigger

EHT beamformee 1 — EHT Compressed Beamforming/CQI 1

EHT beamformee 2 — EHT Compressed Beamforming/CQI 2

⋮

EHT beamformee n — EHT Compressed Beamforming/CQI n

# FIG. 35

BSS AP
(OBSS AP)

Trigger of OBSS
sounding
procedure

BSS AP
(BSS AP)

NDPA for OBSS
sounding

NDP for OBSS
sounding

Trigger for OBBS
sounding

BSS STA
(OBSS STA)

Feedback

OAID engo

EP 4 661 312 A1

FIG. 36

# FIG. 37

BSS AP ─────┤1st Trigger for AP 1, AP 2├────────────┤2nd Trigger for AP 2├──────────────

AP 1 ──────────────────┤NDP sounding procedure├──────────────────────

AP 2 ──────────────────────────────────────────┤NDP sounding procedure├──

TXOP of 1st Trigger

TXOP of 2nd Trigger

# FIG. 38

Obtaining control information related to
Tone Plan (or RU) — S3810

Configuring a PPDU based on
the obtained control information — S3820

Transmitting the PPDU — S3830

# FIG. 39

Receiving a PPDU — S3910

Decoding the PPDU and obtaining control
information related to Tone plane (or RU) — S3920

Decoding a data field based on the RU — S3930

# FIG. 40

receiving, by a second transmitting station (STA), a first trigger frame from a first transmitting STA — S4010

↓

transmitting, by the second transmitting STA, a Null Data Packet Announcement (NDPA) frame to a receiving STA — S4020

↓

transmitting, by the second transmitting STA, an NDP frame to the receiving STA — S4030

↓

receiving, by the second transmitting STA, a feedback frame based on the NDPA frame and the NDP frame from the receiving STA — S4040

# FIG. 41

receiving, by a receiving station (STA), a first trigger frame from a first transmitting STA — S4110

↓

receiving, by the receiving STA, a Null Data Packet Announcement (NDPA) frame from a second transmitting STA — S4120

↓

receiving, by the receiving STA, an NDP frame from the second transmitting STA — S4130

↓

transmitting, by the receiving STA, a feedback frame to the first or second transmitting STA based on the NDPA frame and the NDP frame — S4140

## INTERNATIONAL SEARCH REPORT

| International application No. |
| --- |
| **PCT/KR2024/095594** |

| A. | CLASSIFICATION OF SUBJECT MATTER |
| --- | --- |

**H04B 7/06**(2006.01)i; **H04W 74/00**(2009.01)i; **H04W 74/08**(2009.01)i; **H04W 76/15**(2018.01)i; **H04L 69/14**(2022.01)i; **H04W 84/12**(2009.01)i; **H04W 24/10**(2009.01)i; **H04W 24/08**(2009.01)i; **H04W 16/02**(2009.01)i

According to International Patent Classification (IPC) or to both national classification and IPC

| B. | FIELDS SEARCHED |
| --- | --- |

Minimum documentation searched (classification system followed by classification symbols)

H04B 7/06(2006.01); H04B 7/024(2017.01); H04B 7/0491(2017.01); H04W 48/14(2009.01); H04W 72/04(2009.01); H04W 74/08(2009.01); H04W 84/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NDPA(null data packet announcement), 트리거 프레임(trigger frame), OBSS(overlapping basic service set), 피드백(feedback)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2021-0410048 A1 (NEWRACOM, INC.) 30 December 2021 (2021-12-30)<br>See paragraphs [0091], [0106]-[0107], [0140] and [0151]; claim 20; and figures 8 and 29-30. | 1-18 |
| Y | KR 10-2022-0158029 A (SONY GROUP CORPORATION) 29 November 2022 (2022-11-29)<br>See paragraphs [0201], [0405] and [0408]; and figures 35, 78 and 80. | 1-18 |
| Y | KR 10-2015-0035721 A (LG ELECTRONICS INC.) 07 April 2015 (2015-04-07)<br>See paragraph [0274]; and figure 26. | 7,15 |
| A | US 2019-0036583 A1 (QUALCOMM INCORPORATED) 31 January 2019 (2019-01-31)<br>See paragraphs [0100]-[0102]; claim 1; and figure 13. | 1-18 |
| A | US 2022-0240239 A1 (INTERDIGITAL PATENT HOLDINGS, INC.) 28 July 2022 (2022-07-28)<br>See paragraphs [0123]-[0131]; claim 1; and figures 18-20. | 1-18 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 June 2024** | **12 June 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/095594**

| Patent document cited in search report | | | Publication date (day/month/year) | Patent family member(s) | | | Publication date (day/month/year) |
|---|---|---|---|---|---|---|---|
| US | 2021-0410048 | A1 | 30 December 2021 | None | | | |
| KR | 10-2022-0158029 | A | 29 November 2022 | CN | 114830801 | A | 29 July 2022 |
| | | | | EP | 4147527 | A1 | 15 March 2023 |
| | | | | EP | 4147527 | A4 | 01 November 2023 |
| | | | | JP | 2023-525062 | A | 14 June 2023 |
| | | | | US | 11405944 | B2 | 02 August 2022 |
| | | | | US | 2021-0410163 | A1 | 30 December 2021 |
| | | | | WO | 2021-262654 | A1 | 30 December 2021 |
| KR | 10-2015-0035721 | A | 07 April 2015 | CN | 104429148 | A | 18 March 2015 |
| | | | | CN | 104429148 | B | 11 January 2019 |
| | | | | EP | 2874459 | A1 | 20 May 2015 |
| | | | | EP | 2874459 | A4 | 24 February 2016 |
| | | | | EP | 2874459 | B1 | 18 March 2020 |
| | | | | JP | 2015-527790 | A | 17 September 2015 |
| | | | | JP | 6162801 | B2 | 12 July 2017 |
| | | | | US | 2015-0208436 | A1 | 23 July 2015 |
| | | | | US | 9585165 | B2 | 28 February 2017 |
| | | | | WO | 2014-011006 | A1 | 16 January 2014 |
| US | 2019-0036583 | A1 | 31 January 2019 | CN | 110945795 | A | 31 March 2020 |
| | | | | TW | 201911772 | A | 16 March 2019 |
| | | | | TW | I790253 | B | 21 January 2023 |
| | | | | WO | 2019-023079 | A2 | 31 January 2019 |
| | | | | WO | 2019-023079 | A3 | 14 March 2019 |
| US | 2022-0240239 | A1 | 28 July 2022 | EP | 3020146 | A2 | 18 May 2016 |
| | | | | EP | 3761518 | A1 | 06 January 2021 |
| | | | | EP | 3910810 | A1 | 17 November 2021 |
| | | | | HK | 1224443 | A1 | 18 August 2017 |
| | | | | JP | 2016-526856 | A | 05 September 2016 |
| | | | | JP | 2019-017115 | A | 31 January 2019 |
| | | | | JP | 2021-036712 | A | 04 March 2021 |
| | | | | JP | 7159263 | B2 | 24 October 2022 |
| | | | | TW | 201509149 | A | 01 March 2015 |
| | | | | TW | I665883 | B | 11 July 2019 |
| | | | | US | 10880894 | B2 | 29 December 2020 |
| | | | | US | 11678318 | B2 | 13 June 2023 |
| | | | | US | 2016-0174206 | A1 | 16 June 2016 |
| | | | | US | 2018-0167926 | A1 | 14 June 2018 |
| | | | | US | 2021-0120539 | A1 | 22 April 2021 |
| | | | | US | 2023-0325864 | A1 | 12 October 2023 |
| | | | | WO | 2015-006537 | A2 | 15 January 2015 |
| | | | | WO | 2015-006537 | A3 | 19 March 2015 |

Form PCT/ISA/210 (patent family annex) (July 2022)